# EUROPEAN PATENT APPLICATION

(11) **EP 4 729 166 A1**
(43) Date of publication of application: **22.04.2026**
(21) Application number: 24207012.6
(22) Date of filing: 16.10.2024
(51) Int. Cl.: B01J 19/00, C40B 40/00, C40B 60/00

(54) **MASKLESS PHOTOLITHOGRAPHIC SYNTHESIS**

(71) Applicant: Imec VZW, 3001 Leuven (BE)
(72) Inventor: HOELZ, Kathrin, 3001 Leuven (BE); SET, Ying Ting, 3001 Heverlee (BE); DUTTA, Barundeb, 3000 Leuven (BE); DICTUS, Dries, 3001 Heverlee (BE)
(74) Representative: Winger

(57) **Abstract**

A system (100) for synthesizing copolymerized molecules on a substrate (10) includes: a light source (20) emitting exposure light; a programmable light direction unit (30) for redirecting the light in specific patterns; a substrate holder (40); a reagent delivery system (50) for dispensing reagents; and a lateral movement mechanism (60) for generating relative movement between the light direction unit and the substrate holder. A controller (70) controls: i) reagent dispensing; ii) light exposure in a first pattern; iii) relative movement and adjustment of the light direction unit to a second pattern; and iv) subsequent exposure in the second pattern.

## Description

### Field of the Invention

The present invention relates to systems and methods for synthesizing predetermined libraries of copolymerized molecules, such as nucleic acid oligonucleotides, on a substrate.

### Background of the Invention

The field of oligonucleotide synthesis has seen steady growth in demand across various life science applications. Oligonucleotide libraries are utilized in areas such as antibody discovery, digital data storage, synthetic biology for gene editing platforms, and gene and genome synthesis. All of these applications require accurate, economical and high-throughput large scale oligonucleotide synthesis.

Conventional oligonucleotide synthesis is based on phosphoramidite chemistry involving a cyclic reaction for the stepwise addition of nucleotide monomers to grow an oligonucleotide chain. To synthesize entire oligonucleotide libraries rather than individual strands, the synthesis is performed on substrates such as well plates, glass slides or microchips. These substrates provide addressability of individual reaction sites and local confinement of the nucleotide addition reaction, which are used to prevent potential crosstalk during library synthesis and to achieve the required quality and throughput.

Addressability of local reaction sites can be achieved through various means. Inkjet-printing confines the reagent exchange in wells, while other methods use electrical, thermal, or photolithographic control of the reaction. However, current approaches for synthesizing oligonucleotide libraries face challenges in terms of scalability and cost. Factors such as the number of different oligonucleotides per synthesis run, reagent costs per synthesis cycle, and operation time per synthesis cycle continue to limit the throughput and increase the costs of current approaches.

There is still a need for further advancements in the field to overcome these challenges and meet the growing demand for large-scale, economical, and efficient oligonucleotide library synthesis.

### Summary of the Invention

It is an object of embodiments of the present invention to provide good systems and methods for synthesis of libraries of copolymerized molecules on a substrate. This objective is accomplished by systems and methods for synthesizing a predetermined library of copolymerized molecules on a substrate according to the invention.

In the first aspect, the present invention relates to a system (100) for synthesizing a predetermined library of copolymerized molecules on a substrate (10), the system comprising:
a light source (20) configured to emit exposure light;
a programmable light direction unit (30) configured to redirect the exposure light in a programmable exposure pattern on the substrate (10);
a substrate holder (40);
a reagent delivery system (50) configured to dispense reagents for the synthesis of copolymerized molecules on the substrate (10);
a lateral movement mechanism (60) configured to generate relative lateral movement between the programmable light direction unit (30) and the substrate holder (40); and
a controller (70) configured to:
   i) control the reagent delivery system (50) to dispense a selected reagent on the substrate (10); subsequently
   ii) control the programmable light direction unit (30) to redirect the exposure light in a first predetermined exposure pattern onto the substrate (10); subsequently
   iii) control the lateral movement mechanism (60) to generate relative lateral movement between the programmable light direction unit (30) and the substrate holder (40), and change the configuration of the programmable light direction unit (30) so that it becomes adapted to redirect the exposure light in a second predetermined exposure pattern, different from the first one, onto the substrate (10); and subsequently
   iv) control the programmable light direction unit (30) to redirect the exposure light in the second predetermined exposure pattern onto the substrate (10).

Typically, the controller is further configured to control the iterative execution of steps i) to iv) with varying selected reagents and exposure patterns, in such a way as to synthesize the predetermined library of copolymerized molecules on the substrate (10).

In embodiments, the system may further comprise a washing unit adapted to wash away unreacted monomers from the substrate (10). Typically, in addition to wash away unreacted monomers, side products from the reaction are also washed away. The washing medium (e.g., solvent) applied by the washing unit is typically adapted to the reactant (e.g., monomer or capping agent) used in the preceding step. In embodiment, the washing unit may be adapted to switch between different washing mediums. This way, different washing media can be used after different steps. This washing unit can, for instance be comprised in the reagent delivery system.

In embodiments, when a washing unit is present, the system may further comprise a drying unit for drying the substrate after the washing step.

In embodiments, the controller (70) may be a controller (70) configured to:
i) control the reagent delivery system (50) to dispense onto the substrate (10) a specific monomer based on the predetermined library; subsequently
ii) control the programmable light direction unit (30) to selectively expose specific regions of the substrate (10) to light according to a predetermined exposure pattern, wherein the exposed regions correspond to locations where the specific monomer is to be incorporated into the copolymerized molecule as specified by the predetermined library; subsequently
iii) control the washing unit to wash away unreacted monomers from the substrate (10); and subsequently
iv) repeat steps i) to iii) with subsequent monomers as specified by the predetermined library until the desired copolymerized molecules are synthesized;
   wherein the controller (70) is further configured to perform the following version of step ii) during at least one iteration of step ii):
   iia) control the programmable light direction unit (30) to redirect the exposure light in a first predetermined exposure pattern onto the substrate (10) to selectively expose specific regions of the substrate (10) to light according to a predetermined exposure pattern, wherein the exposed regions correspond to locations where the specific monomer is to be incorporated into the copolymerized molecule as specified by the predetermined library; subsequently
   iib) control the lateral movement mechanism (60) to generate relative lateral movement between the programmable light direction unit (30) and the substrate holder (40), and adjust the configuration of the programmable light direction unit (30) to redirect the exposure light onto the substrate (10) in a second predetermined exposure pattern, different from the first one, to selectively expose specific regions of the substrate (10) to light according to a predetermined exposure pattern, wherein the exposed regions correspond to locations where the specific monomer is to be incorporated into the copolymerized molecule as specified by the predetermined library; and subsequently
   iic) control the programmable light direction unit (30) to redirect the exposure light in the second predetermined exposure pattern onto the substrate (10).

Or expressed differently, the controller (70) may be further configured to, during at least one iteration of step ii:
iia) apply a first predetermined exposure pattern using the programmable light direction unit (30);
iib) generate relative lateral movement between the programmable light direction unit (30) and the substrate holder (40) via the lateral movement mechanism (60), and adjust the programmable light direction unit (30) to a second predetermined exposure pattern different from the first;
iic) apply the second predetermined exposure pattern using the programmable light direction unit (30).

Step iii may comprise selecting an appropriate washing medium.

In embodiments, a step iiib may be present between steps iii and iv, of controlling a drying unit to dry the substrate (10) after washing.

In embodiments, for instance for the synthesis of biomolecules such as polynucleotides, after the monomer addition, light exposure, and washing steps, there may also be a capping step and an oxidation step. Washing is preferably performed after the capping step and also after the oxidation step. An oxidation step helps deblocking the growing copolymer chain when the deblocking is light-induced. If the deblocking is acid-induced, the oxidation step is typically used.

In embodiments, the substrate may be selected from the group consisting of a semiconductor substrate (e.g., a silicon wafer), a silicon oxide substrate, and a glass substrate. These substrates may provide a stable surface for synthesis.

The substrate may have either a planar surface or a structured surface. A structured surface can include three-dimensional confinements such as wells or three-dimensional projections such as pillars. These structures can help prevent crosstalk during light exposure and/or enhance probe collection.

In embodiments, the system (100) may further comprise: a multi-chamber system (200) with at least two process chambers (210), wherein:
a) each process chamber (210) comprises a substrate holder (40);
b) at least a first process chamber (220), designated as a light exposure chamber, comprises:
   i) the substrate holder (40) of the first aspect,
   ii) the programmable light direction unit (30), and
   iii) the lateral movement mechanism (60) configured to generate relative lateral movement between the programmable light direction unit (30) and the substrate holder (40) of the first aspect;
c) the reagent delivery system (50) is configured to dispense reagents in at least a second process chamber (230), different from the first process chamber (220); and
d) a transfer mechanism (240), separate from or comprised in the lateral movement mechanism (60), configured to move the substrate (10) between any of the process chambers (210).

This multi-chamber configuration enables parallelization and optimization of the different synthesis steps.

In embodiments, the multi-chamber system (200) may comprise between 2 and 100 process chambers (210). This allows scaling throughput as needed.

In embodiments, the system (100) may further comprise:
a) a process chamber (300) having multiple levels (310); and
b) a vertical movement mechanism (320) configured to move the substrate holder (40) vertically between the levels (310);
wherein the reagent delivery system (50) is configured to dispense reagents at least at one level (310).

This multi-level configuration enables a compact system design.

In embodiments, the programmable light direction unit (30) may be located in:
a) a first level (310) of the process chamber (300), designated as a light exposure level; or
b) a separate light exposure chamber (220).

This allows optimizing the light exposure step.

In embodiments, the process chamber (300) may comprise at least three levels (310), each level configured for a distinct step in the synthesis process. This enables efficient synthesis workflows.

In embodiments, at least one process chamber (210) or level (310) may comprise a spinning mechanism (600) configured to rotate the substrate holder (40) and wherein the controller is further configured to control the spinning mechanism and the reagent delivery system to dispense reagent on the substrate on the substrate holder.

Spin coating enables uniform reagent spreading using minimal volumes.

In embodiments, the reagent delivery system (50) may comprise one or more dispense units (400); and wherein the lateral movement mechanism (60) is further configured to move the substrate (10) relative to the one or more dispense units (400), so as to enable the coating of the substrate (10) with reagents, and relative to the programmable light direction unit (30), thereby enabling exposure of the substrate.

This configuration allows efficient reagent dispensing across the substrate.

In embodiments, the lateral movement mechanism (60) may be configured to move the substrate (10) in a reciprocating motion relative to a single dispense unit (400). This enables coating the substrate with a single dispense unit, which is economical.

In embodiments, the multiple dispense units (400) may be arranged in a linear configuration, and the lateral movement mechanism (60) may be configured to move the substrate (10) linearly, i.e., in a linear path, relative to the linearly arranged dispense units (400). This allows coating the substrate in a single pass.

In embodiments, the linearly arranged dispense units (400) may comprise separate units for different steps of a synthesis process. This enables a streamlined synthesis workflow.

In embodiments, the controller may be configured to control the lateral movement mechanism (60) to move the substrate (10) in a predetermined manner relative to the multiple dispense units (400). For instance, if each dispense unit dispenses a different monomer of the copolymerized molecule to be synthesized, the predetermined movement of the substrate may be adapted to sequentially expose the substrate to the different monomers, thereby enabling the synthesis of the copolymerized molecule. This may involve back and forth movement of the substrate.

In embodiments, the system may further comprise one or more programmable light direction units (30) positioned between the linearly arranged dispense units (400) for UV exposure of the substrate (10) at predetermined positions in the linear path.

In embodiments, the multiple dispense units (400) may be arranged according to a non-linear configuration, and the lateral movement mechanism (60) may be configured to move the substrate (10) in a non-linear path relative to the circularly arranged dispense units (400).

In embodiments, the non-linearly arranged dispense units (400) may comprise separate units for different reagents or different steps of the synthesis process.

In embodiments, the system may further comprise one or more programmable light direction units (30) positioned between the non-linearly arranged dispense units (400) for UV exposure of the substrate (10) at predetermined positions in the non-linear path.

For all arrangements of the dispense units (400) (linear or not), the controller may be configured to control the lateral movement mechanism (60) to move the substrate (10) in a predetermined manner relative to the multiple dispense units (400). For instance, if each dispense unit dispenses a different monomer of the copolymerized molecule to be synthesized, the predetermined movement of the substrate may be adapted to sequentially expose the substrate to the different monomers, thereby enabling the synthesis of the copolymerized molecule. This may involve back and forth movement of the substrate along its path.

In embodiments, the multiple dispense units (400) may be arranged in a circular configuration, and the lateral movement mechanism (60) may be configured to move the substrate (10) in a circular path relative to the circularly arranged dispense units (400). This enables a compact system design.

In embodiments, the circularly arranged dispense units (400) may comprise separate units for different reagents or different steps of the synthesis process. This allows optimizing reagent handling.

In embodiments, the system may further comprise one or more programmable light direction units (30) positioned between the circularly arranged dispense units (400) for UV exposure of the substrate (10) at predetermined positions in the circular path. This enables in-line light exposure.

In embodiments, the system (100) may further comprise at least one loading station configured to load and unload substrates (10).

Loading stations facilitate automated substrate handling.

In embodiments, at least one process chamber (210) may comprise an independent atmospheric control system configured to maintain a controlled environment.

Atmospheric control prevents side reactions and contamination.

In embodiments, the controlled environment may comprise an atmosphere selected from air, nitrogen, and argon. Nitrogen and argon are inert and readily available.

In embodiments, at least one process chamber (210) may comprise independent temperature (800) and pressure control systems (810).

Temperature and pressure control enable optimizing reaction conditions.

In embodiments, at least one process chamber (210) or level (310) may comprise a dedicated chemical waste collection system (900).

Dedicated waste collection prevents cross-contamination between synthesis steps.

In embodiments, the reagent delivery system (50) may comprise multiple dispense arms (1000) or tubes (1000) configured to dispense different chemicals onto the substrate (10).

Multiple dispense arms enable efficient multi-reagent dispensing.

In embodiments, at least one process chamber (210) or level (310) may comprise a pipetting arm (1100) configured to collect specific copolymerized molecules, e.g., polynucleotides, from the substrate surface.

A pipetting arm allows selective harvesting of synthesized molecules.

In embodiments, the controller (70) may be further configured to execute a predetermined sequence of synthesis steps by controlling the reagent delivery system (50), the programmable light direction unit (30), and
- if multiple process chambers (210) are present, moving the substrate (10) between different process chambers (210) according to a predetermined schedule;
- if multiple levels (310) are present within a process chamber, controlling the vertical movement of the substrate (10) between different levels (310) according to a predetermined schedule.

Automated control enables executing complex synthesis protocols.

In embodiments, the present invention may relate to a system (100) for synthesizing a predetermined library of biopolymers, wherein the reagent delivery system (50) is configured to dispense reagents for biopolymer synthesis. Examples of biopolymers that can be synthesized include, but are not limited to, polynucleotides (e.g., DNA, RNA, or XNA), and peptides (e.g., proteins). XNA (Xenobiotic nucleic acids) are non-canonical nucleic acid analogs, such as HNA (1 ,5-Anhydrohexitol nucleic acid), CeNA (Cyclohexene nucleic acid), TNA (Threose nucleic acid), GNA (Glycol nucleic acid), LNA (locked nucleic acid), PNA (peptide nucleic acid), FANA (Fluoroarabino nucleic acid), amongst others.

In embodiments, the present invention may relate to a system (100) for synthesizing a predetermined library of polynucleotides, wherein the reagent delivery system (50) is configured to dispense reagents for polynucleotide synthesis. Polynucleotide-specific reagents enable efficient DNA/RNA/XNA synthesis.

In these embodiments, the substrate may comprise functional groups appropriate for nucleotide addition. This allows for efficient synthesis of polynucleotides.

In embodiments, the functional groups appropriate for nucleotide addition may be selected from the group consisting of hydroxyl groups, amine groups, NHS esters, azide groups, alkyne groups (e.g., dibenzocyclooctyne (DBCO) groups), biotins, and streptavidins. These functional groups enable different coupling chemistries.

In embodiments, the programmable light direction unit (30) may comprise a digital micromirror device (DMD) (30).

DMDs enable high-resolution light patterning with fast switching times.

In embodiments, the lateral movement mechanism (60) may comprise at least one of:
a) a movable stage supporting the substrate holder (40);
b) a movable arm supporting the programmable light direction unit (30); or
c) a combination of both a movable stage and a movable arm.

These configurations enable relative movement between the light pattern and substrate.

In embodiments, the system (100) may further comprise an in-situ mixing system configured to combine reagents immediately before dispensing onto the substrate (10).

In-situ mixing prevents reagent degradation and side reactions.

In embodiments, the system (100) may further comprise an end-release mechanism (1900) configured to release synthesized oligonucleotides from the substrate (10).

An end-release mechanism enables harvesting the synthesized molecules.

End-release mechanism that can be used to release copolymerized molecules from the surface include, but are not limited to, thermal, electric, optical, or chemical actuation, or a combination thereof. In embodiment, the end-release mechanism can be used to release copolymerized molecules attached to the surface by a specific linker molecule sensitive to the actuation mechanism. Preferably, the linker remains stable throughout the synthesis process.

In embodiments, the end-release mechanism may comprise the controller (70) being further configured to control the programmable light direction unit (30), and lateral movement mechanism (60) to cleave a specific binding molecule that attaches the copolymerized molecule to the substrate (10), and do so at a specific location on the substrate surface. This enables spatially-selective harvesting.

In embodiments, the specific binding molecule may be a photosensitive linker. Ence, in embodiments, the end-release mechanism may comprise the controller (70) being further configured to control the programmable light direction unit (30), and lateral movement mechanism (60) to cleave a photosensitive linker for removing specific copolymerized molecules from the substrate (10). This enables spatially-selective harvesting.

In alternative embodiments, the specific binding molecule may be an acid-labile linker and the cleavage can be performed by a photogeneration of an acid induced by the light of the light direction unit (30).

In embodiments, the light source (20) may be configured to emit exposure light with a peak emission in the range of from 200 to 700 nm, preferably from 330 nm to 410 nm.

These wavelengths enable photochemical reactions without damaging biomolecules (provided the exposure time is adequate for not damaging biomolecules).

In embodiments, the light source (20) may be configured to emit exposure light with a spectrum comprising an intensity at 365 nm that is at least 10% of the maximum intensity in the emitted spectrum. This wavelength is suitable for many photolabile protecting groups.

In embodiments, the light source (20) may comprise at least one of a UV-LED (or an array thereof), a mercury arc lamp, or a laser (e.g., a scanning laser such as a 405 nm scanning laser. These are cost-effective high-intensity UV sources.

In embodiments, the programmable light direction unit (30) may comprise a confinement element (2100) comprising a lens such as a Fresnel lens or a zone plate.

Confinement optics enable focusing light to a small spot size.

In embodiments, the system (100) may further comprise a cleaning mechanism (2000) configured to clean the substrate (10) between light exposure and reagent dispensing, wherein the controller (70) is further configured to control the cleaning mechanism (2000).

Cleaning the substrate prevents carry-over contamination between synthesis steps.

In embodiments, the controller (70) may be configured to control the programmable light direction unit (30) and the lateral movement mechanism (60) such that the second predetermined exposure pattern does not overlap with the first predetermined exposure pattern.

For instance, the controller (70) may be configured to control the programmable light direction unit (30) and the lateral movement mechanism (60) such that the second predetermined exposure pattern is shifted relative to the first predetermined exposure pattern by a distance of from 1.5 to 2.5, preferably from 1.8 to 2.2 the wavelength of the exposure light.

Non-overlapping exposure patterns enable enlarging the exposed substrate area.

In embodiments, the controller (70) may be configured to control the programmable light direction unit (30) and the lateral movement mechanism (60) such that the second predetermined exposure pattern is shifted relative to the first predetermined exposure pattern by less than the smallest distance between two exposure spots in the first predetermined exposure pattern. In other words, the first predetermined exposure pattern may be composed of exposure spots and the second predetermined exposure pattern is shifted with respect to the first predetermined exposure pattern by less than the smallest distance between two exposure spots in the first predetermined exposure pattern, thereby increasing the density of exposed spots on the substrate.

Sub-spot shifting enables increasing the density of exposed features. Solutions of the prior art are constrained by the density limits of the reagent dispensing system. Here, we take a radically different approach.

For instance, the controller (70) may be configured to control the programmable light direction unit (30) and the lateral movement mechanism (60) such that the second predetermined exposure pattern is shifted relative to the first predetermined exposure pattern by a distance of from 0.5 to 0.9 times the smallest distance between two exposure spots in the first predetermined exposure pattern. The smallest distance between two illuminated areas (or spots) may for instance be from 0.8 to 1.5 times, preferably from 0.9 to 1.2 times the wavelength of the exposure light.

In embodiments, the system (100) may further comprise a temperature control mechanism configured to maintain the substrate (10) at a predetermined temperature during reagent dispensing and light exposure, wherein the controller (70) is further configured to control the temperature control mechanism.

Temperature control enables optimizing reaction kinetics and specificity.

In embodiments, the reagent delivery system (50) may comprise multiple reagent reservoirs, each configured to contain a different monomer for copolymerized molecule synthesis.

Dedicated monomer reservoirs prevent cross-contamination.

In embodiments, the system (100) may further comprise an inert gas supply system configured to maintain an inert atmosphere in the vicinity of the substrate (10) during synthesis, wherein the controller (70) is further configured to control the inert gas supply system.

An inert atmosphere prevents unwanted oxidation reactions.

Any feature of any embodiment of the first aspect may be as correspondingly described in any of the other aspects.

In the second aspect, the present invention relates to a method for synthesizing a predetermined library of copolymerized molecules on a substrate based on a predetermined library design, the method comprising:
a. providing a system comprising:
   - a light source configured to emit exposure light;
   - a programmable light direction unit configured to redirect the exposure light in a programmable exposure pattern on the substrate;
   - a substrate holder having a substrate therein;
   - a reagent delivery system configured to dispense reagents for the synthesis of copolymerized molecules on the substrate;
   - a lateral movement mechanism configured to generate relative lateral movement between the programmable light direction unit and the substrate holder; and
b. iteratively synthesizing the copolymerized molecules at synthesis sites on the substrate by repeating the following steps until the predetermined library is complete:
   i) selecting a specific monomer from a predefined set of monomers, wherein the selection is based on the predetermined library design; subsequently
   ii) dispensing the selected monomer onto the substrate; subsequently
   iii) activating some of the dispensed monomers wherein said activation comprises selectively exposing specific regions of the substrate to light according to a predetermined pattern, wherein the exposed regions represent locations where the current monomer should be incorporated into a copolymerized molecule according to the predetermined library design, subsequently
   iv) washing away unreacted monomers from the substrate; and subsequently
   v) repeating steps i-iv with subsequent monomers as specified by the predetermined library design until the desired copolymerized molecules are completed,
   wherein at least one of the steps iii) comprises:
   iiia) controlling the programmable light direction unit to redirect exposure light in a first predetermined exposure pattern onto the substrate; subsequently
   iiib) controlling the lateral movement mechanism to generate relative lateral movement between the programmable light direction unit and the substrate holder, and change the configuration of the programmable light direction so that it becomes adapted to redirect the exposure light in a second predetermined exposure pattern, different from the first one, onto the substrate; and subsequently
   iiic) controlling the programmable light direction unit to redirect the exposure light in the second predetermined exposure pattern onto the substrate.

This enables high-throughput synthesis of complex molecule libraries.

In embodiments, the system provided in step a) may be a system according to the first aspect and wherein step b is performed by operating the controller. This simplifies the synthesis process.

In embodiments,
a. step a) may consist in providing a system according to the first aspect having a substrate in a process chamber other than the light exposure chamber; and
b. step b) may comprise:
   - dispensing a reagent on the substrate using the reagent delivery system; subsequently
   - using the transfer mechanism to move the substrate with the dispensed reagent to the light exposure chamber; subsequently
   - redirecting exposure light from the light source in a predetermined exposure pattern onto the substrate using the programmable light direction unit in the light exposure chamber; and subsequently
   - optionally, using the transfer mechanism to move the substrate to a process chamber other than the light exposure chamber for either further processing or repeating steps b) to d) one or more times for additional synthesis cycles.

This allows the synthesis and light exposure steps to be performed in separate optimized chambers.

In embodiments,
a. step a) may consist in providing a system according to the first aspect having a substrate in the substrate holder; and
b. step b) may comprise:
   - performing a step ii) at the second level, subsequently
   - operating the vertical movement mechanism to move the substrate holder vertically to the first level, and subsequently
   - performing a step iii) at the first level.

This enables vertical integration of the synthesis steps.

In embodiments,
a. step a) may consist in providing a system according to the first aspect having a substrate in the substrate holder; and
b. step b) may comprise a step ii) of dispensing the selected monomer onto the substrate by activating one of the dispense units and controlling the lateral movement mechanism to move the substrate relative to said one of the dispense units.

This allows the reagent to be efficiently coated on the substrate.

In embodiments, the copolymerized molecules may be nucleic acid polynucleotides. This enables synthesis of nucleic acid libraries.

In embodiments, selectively exposing specific regions of the substrate to light may activate nucleotide addition in growing nucleic acid polynucleotides, wherein the activation is either direct or indirect. This enables light-directed synthesis of nucleic acid polynucleotides.

In embodiments, the activation of nucleotide addition may comprise at least one of:
i) removal of protective groups for a subsequent nucleotide addition, or
ii) activation or uncaging of an enzyme for subsequent addition of nucleotides.

This provides two alternative routes for light-activated synthesis.

In embodiments,
a. when the activation involves removal of protective groups, the nucleotide addition may be performed using phosphoramidite chemistry; and
b. when the activation involves activation or uncaging of an enzyme, the nucleotide addition may involve enzymatic nucleotide coupling.

This matches the activation mechanism to the appropriate synthesis chemistry.

In embodiments, the removal of protective groups may comprise:
a. photolithographic removal of UV-labile protective groups; or
b. photolithographic removal of acid-labile protective groups, using methods such as photogeneration of acids, photoresist or photoelectrochemistry.

This provides options for the protective group chemistry.

In embodiments,
a. the UV-labile protective groups may be selected from the group consisting of MeNPOC, NVOC, DMBOC, NPPOC, BzNPPOC, SPhNPPOC, and functionally equivalent UV-labile protective groups; or
b. the acid-labile protective groups may be selected from the group consisting of DMT, MMT, and functionally equivalent acid-labile protective groups.

These are suitable protective groups for the respective deprotection mechanisms.

In embodiments, the enzyme suitable for enzymatic nucleotide coupling may be selected from the group consisting of DNA polymerases, RNA polymerases, terminal transferases, and functionally equivalent enzymes capable of catalyzing nucleotide addition. These enzymes efficiently catalyze nucleotide coupling.

In embodiments, the method may further comprise maintaining an inert atmosphere in the vicinity of the substrate during synthesis using an inert gas supply system. This prevents oxidative degradation of reagents.

In embodiments, the method may further comprise controlling the temperature of the substrate during reagent dispensing and light exposure using a temperature control system. This provides optimal conditions for the synthesis.

In embodiments,
a. the second predetermined exposure pattern may not overlap with the first predetermined exposure pattern, thereby enlarging the area of the substrate that has been exposed; or
b. the first predetermined exposure pattern may be composed of exposure spots and wherein the second predetermined exposure pattern is shifted with respect to the first predetermined exposure pattern by less than the smallest distance between two exposure spots in the first predetermined exposure pattern, thereby increasing the density of exposed spots on the substrate.

This allows the exposure pattern to be expanded or densified as needed.

In embodiments, the method may further comprise a step c) of removing specific copolymerized molecules from the substrate by performing steps iiia) to iiic) to trigger the release of a copolymerized molecule from the substrate, e.g. ,by cleaving a photosensitive linker attaching the copolymerized molecules to the substrate. This allows specific molecules to be selectively cleaved from the substrate.

Any feature of any embodiment of the second aspect may be as correspondingly described in the first aspect.

In the third aspect, the present invention relates to a system for synthesizing a predetermined library of copolymerized molecules on a substrate, the system comprising:
a. a light source configured to emit exposure light;
b. a programmable light direction unit configured to redirect the exposure light in a programmable exposure pattern on the substrate;
c. a multi-chamber system with at least two process chambers, wherein:
   i) each process chamber comprises a substrate holder;
   ii) at least one process chamber, designated as a light exposure chamber, comprises:
      (1) a substrate holder configured to hold the substrate, and
      (2) the programmable light direction unit;
d. a reagent delivery system configured to dispense reagents for the synthesis of copolymerized molecules on the substrate in at least one of the process chambers other than the light exposure chamber;
e. a transfer mechanism configured to move the substrate between any of the process chambers; and
f. a controller configured to:
   i) control the reagent delivery system to dispense a selected reagent on the substrate in a process chamber other than the light exposure chamber; subsequently
   ii) control the transfer mechanism to move the substrate to the light exposure chamber; and subsequently
   iii) control the programmable light direction unit to redirect the exposure light in a predetermined exposure pattern onto the substrate,
wherein the controller is further configured to control the iterative execution of steps i) to iii) with varying selected reagents and exposure patterns, in such a way as to synthesize the predetermined library of copolymerized molecules on the substrate (10).

This allows the synthesis and light exposure to be optimized in separate chambers.

In embodiments, the system may further comprise a washing unit adapted to wash away unreacted monomers from the substrate (10). Typically, in addition to wash away unreacted monomers, side products from the reaction are also washed away. The washing medium (e.g., solvent) applied by the washing unit is typically adapted to the reactant (e.g., monomer or capping agent) used in the preceding step. In embodiment, the washing unit may be adapted to switch between different washing mediums. This way, different washing media can be used after different steps. This washing unit can, for instance be comprised in the reagent delivery system. In embodiments, when a washing unit is present, the system may further comprise a drying unit for drying the substrate after the washing step.

In embodiments, the controller (70) may be a controller (70) configured to:
i) control the reagent delivery system (50) to dispense onto the substrate (10) a specific monomer based on the predetermined library; subsequently
ii) control the programmable light direction unit (30) to selectively expose specific regions of the substrate (10) to light according to a predetermined exposure pattern, wherein the exposed regions correspond to locations where the specific monomer is to be incorporated into the copolymerized molecule as specified by the predetermined library; subsequently
iii) control the washing unit to wash away unreacted monomers from the substrate (10); and subsequently
iv) repeat steps i) to iii) with subsequent monomers as specified by the predetermined library until the desired copolymerized molecules are synthesized.

Step iii may comprise selecting an appropriate washing medium.

In embodiments, a step iiib may be present between steps iii and iv, of controlling a drying unit to dry the substrate (10) after washing.

In embodiments, for instance for the synthesis of biomolecules such as polynucleotides, after the monomer addition, light exposure, and washing steps, there may also be a capping step and an oxidation step. Washing is preferably performed after the capping step and also after the oxidation step. An oxidation step helps deblocking the growing copolymer chain when the deblocking is light-induced. If the deblocking is acid-induced, the oxidation step is typically used.

In embodiments, the substrate may be selected from the group consisting of a semiconductor substrate (e.g., a silicon wafer), a silicon oxide substrate, and a glass substrate. These substrates can provide a stable surface for synthesis.

The substrate may have either a planar surface or a structured surface. A structured surface can include three-dimensional confinements such as wells or three-dimensional projections such as pillars. These structures can help prevent crosstalk during light exposure and/or enhance probe collection.

In embodiments, the multi-chamber system (200) may comprise between 2 and 100 process chambers (210). This allows scaling throughput as needed.

In embodiments, the system (100) may further comprise:
a) a process chamber (300) having multiple levels (310); and
b) a vertical movement mechanism (320) configured to move the substrate holder (40) vertically between the levels (310);
wherein the reagent delivery system (50) is configured to dispense reagents at least at one level (310).

This multi-level configuration enables a compact system design.

In embodiments, the programmable light direction unit (30) may be located in:
a) a first level (310) of the process chamber (300), designated as a light exposure level; or
b) a separate light exposure chamber (220).

This allows optimizing the light exposure step.

In embodiments, the process chamber (300) may comprise at least three levels (310), each level configured for a distinct step in the synthesis process. This enables efficient synthesis workflows.

In embodiments, at least one process chamber (210) or level (310) may comprise a spinning mechanism (600) configured to rotate the substrate holder (40) and wherein the controller is further configured to control the spinning mechanism and the reagent delivery system to dispense reagent on a substrate on the substrate holder.

Spin coating enables uniform reagent spreading using minimal volumes.

In embodiments, the system (100) may further comprise at least one loading station configured to load and unload substrates (10).

Loading stations enable automated substrate handling.

In embodiments, at least one process chamber (210) may comprise an independent atmospheric control system configured to maintain a controlled environment.

Atmospheric control prevents side reactions and contamination.

In embodiments, the controlled environment may comprise an atmosphere selected from air, nitrogen, and argon. Nitrogen and argon are inert and readily available.

In embodiments, at least one process chamber (210) may comprise independent temperature (800) and pressure control systems (810).

Temperature and pressure control enable optimizing reaction conditions.

In embodiments, at least one process chamber (210) or level (310) may comprise a dedicated chemical waste collection system (900).

Dedicated waste collection prevents cross-contamination between synthesis steps.

In embodiments, the reagent delivery system (50) may comprise multiple dispense arms (1000) or tubes (1000) configured to dispense different chemicals onto the substrate (10).

Multiple dispense arms enable efficient multi-reagent dispensing.

In embodiments, at least one process chamber (210) or level (310) may comprise a pipetting arm (1100) configured to collect specific copolymerized molecules, e.g., polynucleotides, from the substrate surface.

A pipetting arm allows selective harvesting of synthesized molecules.

In embodiments, the controller (70) may be further configured to execute a predetermined sequence of synthesis steps by controlling the reagent delivery system (50), the programmable light direction unit (30), and moving the substrate (10) between different process chambers (210) according to a predetermined schedule;

Optionally, if multiple levels (310) are present within a process chamber, the controller may be further configured to control the vertical movement of the substrate (10) between different levels (310) according to a predetermined schedule.

Automated control enables executing complex synthesis protocols.

In embodiments, the present invention may relate to a system (100) for synthesizing a predetermined library of biopolymers, wherein the reagent delivery system (50) is configured to dispense reagents for biopolymer synthesis. Examples of biopolymers that can be synthesized include, but are not limited to, polynucleotides (e.g., DNA, RNA, or XNA), and peptides (e.g., proteins). XNA (Xenobiotic nucleic acids) are non-canonical nucleic acid analogs, such as HNA (1,5-Anhydrohexitol nucleic acid), CeNA (Cyclohexene nucleic acid), TNA (Threose nucleic acid), GNA (Glycol nucleic acid), LNA (locked nucleic acid), PNA (peptide nucleic acid), FANA (Fluoroarabino nucleic acid), amongst others.

In embodiments, the present invention may relate to a system (100) for synthesizing a predetermined library of polynucleotides, wherein the reagent delivery system (50) is configured to dispense reagents for polynucleotide synthesis. Polynucleotide-specific reagents enable efficient DNA/RNA/XNA synthesis.

In these embodiments, the substrate may comprise functional groups appropriate for nucleotide addition. This allows for efficient synthesis of polynucleotides.

In embodiments, the functional groups appropriate for nucleotide addition may be selected from the group consisting of hydroxyl groups, amine groups, NHS esters, azide groups, alkynes groups (e.g., dibenzocyclooctyne (DBCO) groups), biotins, and streptavidins. These functional groups enable different coupling chemistries.

Polynucleotide-specific reagents enable efficient DNA/RNA/XNA synthesis.

In embodiments, the programmable light direction unit (30) may comprise a digital micromirror device (DMD) (30).

DMDs enable high-resolution light patterning with fast switching times.

In embodiments, the light source (20) may be configured to emit exposure light with a peak emission in the range of from 200 to 700 nm, preferably from 330 nm to 410 nm.

These wavelengths enable photochemical reactions without damaging biomolecules.

In embodiments, the light source (20) may be configured to emit exposure light with a spectrum comprising an intensity at 365 nm that is at least 10% of the maximum intensity in the emitted spectrum. This wavelength is suitable for many photolabile protecting groups.

In embodiments, the light source (20) may comprise at least one of a UV-LED (or an array thereof), a mercury arc lamp, or a laser (e.g., a scanning laser such as a 405 nm scanning laser. These are cost-effective high-intensity UV sources.

In embodiments, the programmable light direction unit (30) may comprise a confinement element (2100) comprising a lens such as a Fresnel lens or a zone plate.

Confinement optics enable focusing light to a small spot size.

In embodiments, the system (100) may further comprise a cleaning mechanism (2000) configured to clean the substrate (10) between light exposure and reagent dispensing, wherein the controller (70) is further configured to control the cleaning mechanism (2000).

Cleaning the substrate prevents carry-over contamination between synthesis steps.

In embodiments, the system (100) may further comprise a temperature control mechanism configured to maintain the substrate (10) at a predetermined temperature during reagent dispensing and light exposure, wherein the controller (70) is further configured to control the temperature control mechanism.

Temperature control enables optimizing reaction kinetics and specificity.

In embodiments, the reagent delivery system (50) may comprise multiple reagent reservoirs, each configured to contain a different monomer for copolymerized molecule synthesis.

Dedicated monomer reservoirs prevent cross-contamination.

In embodiments, the system (100) may further comprise an inert gas supply system configured to maintain an inert atmosphere in the vicinity of the substrate (10) during synthesis, wherein the controller (70) is further configured to control the inert gas supply system.

An inert atmosphere prevents unwanted oxidation reactions.

Any feature of any embodiment of the third aspect may be as correspondingly described in the first aspect. Also, any feature described as being further comprised in the first aspect may also be further comprised in the third aspect.

In the fourth aspect, the present invention relates to a method for synthesizing a predetermined library of copolymerized molecules on a substrate based on a predetermined library design, the method comprising:
a. providing a system according to the third aspect having a substrate in one of the process chambers other than the light exposure chamber; subsequently
b. iteratively synthesizing the copolymerized molecules on the substrate by repeating the following steps until the predetermined library is complete:
   i) selecting a specific monomer from a predefined set of monomers, wherein the selection is based on the predetermined library design; subsequently
   ii) dispensing the selected monomer onto the substrate using the reagent delivery system in the process chamber where the substrate is located; subsequently
   iii) using the transfer mechanism to move the substrate with the dispensed reagent to the light exposure chamber; subsequently
   iv) activating some of the dispensed monomers wherein said activation comprises selectively exposing specific regions of the substrate to light according to a predetermined pattern, wherein the exposed regions represent locations where the current monomer should be incorporated into a copolymerized molecule according to the predetermined library design; subsequently
   v) washing away unreacted monomers from the substrate; and subsequently
   vi) repeating steps i-v with subsequent monomers as specified by the predetermined library design until the desired copolymerized molecules are completed.

This enables high-throughput synthesis using a multi-chamber system.

In embodiments, the system provided in step a) may be a system according to the third aspect and wherein step b is performed by operating the controller. This simplifies the synthesis process.

In embodiments,
a. step a) may consist in providing a system according to the third aspect having a substrate in a process chamber other than the light exposure chamber; and
b. step b) may comprise:
   - dispensing a reagent on the substrate using the reagent delivery system; subsequently
   - using the transfer mechanism to move the substrate with the dispensed reagent to the light exposure chamber; subsequently
   - redirecting exposure light from the light source in a predetermined exposure pattern onto the substrate using the programmable light direction unit in the light exposure chamber; and subsequently
   - optionally, using the transfer mechanism to move the substrate to a process chamber other than the light exposure chamber for either further processing or repeating steps b) to d) one or more times for additional synthesis cycles.

This allows the synthesis and light exposure steps to be performed in separate optimized chambers.

In embodiments,
a. step a) may consist in providing a system according to the third aspect having a substrate in the substrate holder; and
b. step b) may comprise:
   - performing a step ii) at the second level, subsequently
   - operating the vertical movement mechanism to move the substrate holder vertically to the first level, and subsequently
   - performing a step iii) at the first level.

This enables vertical integration of the synthesis steps.

In embodiments,
a. step a) may consist in providing a system according to the third aspect having a substrate in the substrate holder; and
b. step b) may comprise a step ii) of dispensing the selected monomer onto the substrate by activating one of the dispense units and controlling a lateral movement mechanism to move the substrate relative to said one of the dispense units.

This allows the reagent to be efficiently coated on the substrate.

In embodiments, the copolymerized molecules may be nucleic acid polynucleotides. This enables synthesis of nucleic acid libraries.

In embodiments, selectively exposing specific regions of the substrate to light may activate nucleotide addition in growing nucleic acid polynucleotides, wherein the activation is either direct or indirect. This enables light-directed synthesis.

In embodiments, the activation of nucleotide addition may comprise at least one of:
i) removal of protective groups for a subsequent nucleotide addition, or
ii) activation or uncaging of an enzyme for subsequent addition of nucleotides.

This provides two alternative routes for light-activated synthesis.

In embodiments,
a. when the activation involves removal of protective groups, the nucleotide addition may be performed using phosphoramidite chemistry; and
b. when the activation involves activation or uncaging of an enzyme, the nucleotide addition may involve enzymatic nucleotide coupling.

This matches the activation mechanism to the appropriate synthesis chemistry.

In embodiments, the removal of protective groups may comprise:
a. photolithographic removal of UV-labile protective groups; or
b. photolithographic removal of acid-labile protective groups, using methods such as photogeneration of acids, photoresist or photoelectrochemistry.

This provides options for the protective group chemistry.

In embodiments,
a. the UV-labile protective groups may be selected from the group consisting of MeNPOC, NVOC, DMBOC, BzNPPOC, SPhNPPOC, and functionally equivalent UV-labile protective groups; or
b. the acid-labile protective groups may be selected from the group consisting of DMT, MMT, and functionally equivalent acid-labile protective groups.

These are suitable protective groups for the respective deprotection mechanisms.

In embodiments, the enzyme suitable for enzymatic nucleotide coupling may be selected from the group consisting of DNA polymerases, RNA polymerases, terminal transferases, and functionally equivalent enzymes capable of catalyzing nucleotide addition. These enzymes efficiently catalyze nucleotide coupling.

In embodiments, the method may further comprise maintaining an inert atmosphere in the vicinity of the substrate during synthesis using an inert gas supply system. This prevents oxidative degradation of reagents.

In embodiments, the method may further comprise controlling the temperature of the substrate during reagent dispensing and light exposure using a temperature control system. This provides optimal conditions for the synthesis.

In embodiments, the method may further comprise a step c) of removing specific copolymerized molecules from the substrate by performing steps iiia) to iiic) to trigger the release of a copolymerized molecule from the substrate, e.g., by cleaving a photosensitive linker attaching the copolymerized molecules to the substrate. This allows specific molecules to be selectively cleaved from the substrate.

Any feature of any embodiment of the fourth aspect may be as correspondingly described in the second aspect. Also, any feature described as being further comprised in the second aspect may also be further comprised in the third aspect.

In the fifth aspect, the present invention relates to a system for synthesizing a predetermined library of copolymerized molecules on a substrate, the system comprising:
a. a light source configured to emit exposure light;
b. a programmable light direction unit configured to redirect the exposure light in a programmable exposure pattern on the substrate;
c. a process chamber having multiple levels and a vertical movement mechanism configured to move the substrate holder vertically between the levels; wherein:
   - at least a light exposure level, comprises the programmable light direction unit; and
   - the reagent delivery system is configured to dispense reagents at least at a dispensing level, different from the light exposure level
d. a controller configured to:
   i) control the reagent delivery system to dispense a selected reagent on the substrate at the dispensing level; subsequently
   ii) control the transfer mechanism to move the substrate to the light exposure level; and subsequently
   iii) control the programmable light direction unit to redirect the exposure light in a predetermined exposure pattern onto the substrate at the light exposure level,
wherein the controller is further configured to control the iterative execution of steps i) to iii) with varying selected reagents and exposure patterns, in such a way as to synthesize the predetermined library of copolymerized molecules on the substrate (10).

This enables vertical integration of the synthesis and light exposure steps.

In embodiments, the system may further comprise a washing unit adapted to wash away unreacted monomers from the substrate (10). Typically, in addition to wash away unreacted monomers, side products from the reaction are also washed away. The washing medium (e.g., solvent) applied by the washing unit is typically adapted to the reactant (e.g., monomer or capping agent) used in the preceding step. In embodiment, the washing unit may be adapted to switch between different washing mediums. This way, different washing media can be used after different steps. This washing unit can, for instance, be comprised in the reagent delivery system. In embodiments, when a washing unit is present, the system may further comprise a drying unit for drying the substrate after the washing step.

In embodiments, the controller (70) may be a controller (70) configured to:
i) control the reagent delivery system (50) to dispense onto the substrate (10) a specific monomer based on the predetermined library; subsequently
ii) control the programmable light direction unit (30) to selectively expose specific regions of the substrate (10) to light according to a predetermined exposure pattern, wherein the exposed regions correspond to locations where the specific monomer is to be incorporated into the copolymerized molecule as specified by the predetermined library; subsequently
iii) control the washing unit to wash away unreacted monomers from the substrate (10); and subsequently
iv) repeat steps i) to iii) with subsequent monomers as specified by the predetermined library until the desired copolymerized molecules are synthesized.

Step iii may comprise selecting an appropriate washing medium.

In embodiments, a step iiib may be present between steps iii and iv, of controlling a drying unit to dry the substrate (10) after washing.

In embodiments, for instance for the synthesis of biomolecules such as polynucleotides, after the monomer addition, light exposure, and washing steps, there may also be a capping step and an oxidation step. Washing is preferably performed after the capping step and also after the oxidation step. An oxidation step helps deblocking the growing copolymer chain when the deblocking is light-induced. If the deblocking is acid-induced, the oxidation step is typically used.

In embodiments, the substrate may be selected from the group consisting of a semiconductor substrate (e.g., a silicon wafer), a silicon oxide substrate, and a glass substrate. These substrates provide a stable surface for synthesis. The substrate may have either a planar surface or a structured surface. A structured surface can include three-dimensional confinements such as wells or three-dimensional projections such as pillars. These structures can help prevent crosstalk during light exposure and/or enhance probe collection.

In embodiments, the multi-chamber system (200) may comprise between 2 and 100 process chambers (210). This allows scaling throughput as needed.

In embodiments, the programmable light direction unit (30) may be located in:
a) a first level (310) of the process chamber (300), designated as a light exposure level; or
b) a separate light exposure chamber (220).

This allows optimizing the light exposure step.

In embodiments, the process chamber (300) may comprise at least three levels (310), each level configured for a distinct step in the synthesis process. This enables efficient synthesis workflows.

In embodiments, at least one process chamber (210) or level (310) may comprise a spinning mechanism (600) configured to rotate the substrate holder (40) and wherein the controller is further configured to control the spinning mechanism and the reagent delivery system to dispense reagent on the substrate on the substrate holder.

Spin coating enables uniform reagent spreading using minimal volumes.

In embodiments, the system (100) may further comprise at least one loading station configured to load and unload substrates (10).

Loading stations enable automated substrate handling.

In embodiments, at least one process chamber (210) may comprise an independent atmospheric control system configured to maintain a controlled environment.

Atmospheric control prevents side reactions and contamination.

In embodiments, the controlled environment may comprise an atmosphere selected from air, nitrogen, and argon. Nitrogen and argon are inert and readily available.

In embodiments, at least one process chamber (210) may comprise independent temperature (800) and pressure control systems (810).

Temperature and pressure control enable optimizing reaction conditions.

In embodiments, at least one process chamber (210) or level (310) may comprise a dedicated chemical waste collection system (900).

Dedicated waste collection prevents cross-contamination between synthesis steps.

In embodiments, the reagent delivery system (50) may comprise multiple dispense arms (1000) or tubes (1000) configured to dispense different chemicals onto the substrate (10).

Multiple dispense arms enable efficient multi-reagent dispensing.

In embodiments, at least one process chamber (210) or level (310) may comprise a pipetting arm (1100) configured to collect specific copolymerized molecules, e.g., polynucleotides, from the substrate surface.

A pipetting arm allows selective harvesting of synthesized molecules.

In embodiments, the controller may be further configured to control the vertical movement of the substrate (10) between different levels (310) according to a predetermined schedule. Optionally, if multiple chambers are present, the controller (70) may be further configured to execute a predetermined sequence of synthesis steps by controlling the reagent delivery system (50), the programmable light direction unit (30), and moving the substrate (10) between different process chambers (210) according to a predetermined schedule;

Automated control enables executing complex synthesis protocols.

In embodiments, the present invention may relate to a system (100) for synthesizing a predetermined library of polynucleotides, wherein the reagent delivery system (50) is configured to dispense reagents for polynucleotide synthesis.

In embodiments, the present invention may relate to a system (100) for synthesizing a predetermined library of biopolymers, wherein the reagent delivery system (50) is configured to dispense reagents for biopolymer synthesis. Examples of biopolymers that can be synthesized include, but are not limited to, polynucleotides (e.g., DNA, RNA, or XNA), and peptides (e.g., proteins). XNA (Xenobiotic nucleic acids) are non-canonical nucleic acid analogs, such as HNA (1,5-Anhydrohexitol nucleic acid), CeNA (Cyclohexene nucleic acid), TNA (Threose nucleic acid), GNA (Glycol nucleic acid), LNA (locked nucleic acid), PNA (peptide nucleic acid), FANA (Fluoroarabino nucleic acid), amongst others.

In these embodiments, the substrate may comprise functional groups appropriate for nucleotide addition. This allows for efficient synthesis of polynucleotides.

In embodiments, the functional groups appropriate for nucleotide addition may be selected from the group consisting of hydroxyl groups, amine groups, NHS esters, azide groups, alkyne groups (e.g., dibenzo cyclooctyne (DBCO) groups), biotin and streptavidin. These functional groups enable different coupling chemistries.

Polynucleotide-specific reagents enable efficient DNA/RNA/XNA synthesis.

In embodiments, the programmable light direction unit (30) may comprise a digital micromirror device (DMD) (30).

DMDs enable high-resolution light patterning with fast switching times.

In embodiments, the light source (20) may be configured to emit exposure light with a peak emission in the range of from 200 to 700 nm, preferably from 330 nm to 410 nm.

These wavelengths enable photochemical reactions without damaging biomolecules.

In embodiments, the light source (20) may be configured to emit exposure light with a spectrum comprising an intensity at 365 nm that is at least 10% of the maximum intensity in the emitted spectrum. This wavelength is suitable for many photolabile protecting groups.

In embodiments, the light source (20) may comprise at least one of a UV-LED (or an array thereof), a mercury arc lamp, or a laser (e.g., a scanning laser such as a 405 nm scanning laser. These are cost-effective high-intensity UV sources.

In embodiments, the programmable light direction unit (30) may comprise a confinement element (2100) comprising a lens such as a Fresnel lens or a zone plate.

Confinement optics enable focusing light to a small spot size.

In embodiments, the system (100) may further comprise a cleaning mechanism (2000) configured to clean the substrate (10) between light exposure and reagent dispensing, wherein the controller (70) is further configured to control the cleaning mechanism (2000).

Cleaning the substrate prevents carry-over contamination between synthesis steps.

In embodiments, the system (100) may further comprise a temperature control mechanism configured to maintain the substrate (10) at a predetermined temperature during reagent dispensing and light exposure, wherein the controller (70) is further configured to control the temperature control mechanism.

Temperature control enables optimizing reaction kinetics and specificity.

In embodiments, the reagent delivery system (50) may comprise multiple reagent reservoirs, each configured to contain a different monomer for copolymerized molecule synthesis.

Dedicated monomer reservoirs prevent cross-contamination.

In embodiments, the system (100) may further comprise an inert gas supply system configured to maintain an inert atmosphere in the vicinity of the substrate (10) during synthesis, wherein the controller (70) is further configured to control the inert gas supply system.

An inert atmosphere prevents unwanted oxidation reactions.

Any feature of any embodiment of the fifth aspect may be as correspondingly described in the second aspect. Also, any feature described as being further comprised in the first aspect may also be further comprised in the fifth aspect.

In the sixth aspect, the present invention relates to a method for synthesizing a predetermined library of copolymerized molecules on a substrate based on a predetermined library design, the method comprising:
a. providing a system according to the fifth aspect having a substrate in the substrate holder, the substrate holder being at a dispensing level; subsequently
b. iteratively synthesizing the copolymerized molecules on the substrate by repeating the following steps until the predetermined library is complete:
   i) selecting a specific monomer from a predefined set of monomers, wherein the selection is based on the predetermined library design; subsequently
   ii) dispensing the selected monomer onto the substrate using the reagent delivery system at the dispensing level where the substrate holder is located; subsequently
   iii) using the transfer mechanism to move the substrate with the dispensed monomer to the light exposure level; subsequently
   iv) activating some of the dispensed monomers wherein said activation comprises selectively exposing specific regions of the substrate to light according to a predetermined pattern, wherein the exposed regions represent locations where the current monomer should be incorporated into a copolymerized molecule according to the predetermined library design; subsequently
   v) washing away unreacted monomers from the substrate; and subsequently
   vi) repeating steps i-v with subsequent monomers as specified by the predetermined library design until the desired copolymerized molecules are completed.

This enables high-throughput synthesis using a vertically integrated system. In embodiments,
a. step a) may consist in providing a system according to the fifth aspect having a substrate in a process chamber other than the light exposure chamber; and
b. step b) may comprise:
   - dispensing a reagent on the substrate using the reagent delivery system; subsequently
   - using the transfer mechanism to move the substrate with the dispensed reagent to the light exposure chamber; subsequently
   - redirecting exposure light from the light source in a predetermined exposure pattern onto the substrate using the programmable light direction unit in the light exposure chamber; and subsequently
   - optionally, using the transfer mechanism to move the substrate to a process chamber other than the light exposure chamber for either further processing or repeating steps b) to d) one or more times for additional synthesis cycles.

This allows the synthesis and light exposure steps to be performed in separate optimized chambers.

In embodiments,
a. step a) may consist in providing a system according to the fifth aspect having a substrate in the substrate holder; and
b. step b) may comprise:
   - performing a step ii) at the second level, subsequently
   - operating the vertical movement mechanism to move the substrate holder vertically to the first level, and subsequently
   - performing a step iii) at the first level.

This enables vertical integration of the synthesis steps.

In embodiments,
a. step a) may consist in providing a system according to the fifth aspect having a substrate in the substrate holder; and
b. step b) may comprise a step ii) of dispensing the selected monomer onto the substrate by activating one of the dispense units and controlling a lateral movement mechanism to move the substrate relative to said one of the dispense units.

This allows the reagent to be efficiently coated on the substrate.

In embodiments, the copolymerized molecules may be nucleic acid polynucleotides. This enables synthesis of nucleic acid libraries.

In embodiments, selectively exposing specific regions of the substrate to light may activate nucleotide addition in growing nucleic acid polynucleotides, wherein the activation is either direct or indirect. This enables light-directed synthesis.

In embodiments, the activation of nucleotide addition may comprise at least one of:
i) removal of protective groups for a subsequent nucleotide addition, or
ii) activation or uncaging of an enzyme for subsequent addition of nucleotides.

This provides two alternative routes for light-activated synthesis.

In embodiments,
a. when the activation involves removal of protective groups, the nucleotide addition may be performed using phosphoramidite chemistry; and
b. when the activation involves activation or uncaging of an enzyme, the nucleotide addition may involve enzymatic nucleotide coupling.

This matches the activation mechanism to the appropriate synthesis chemistry.

In embodiments, the removal of protective groups may comprise:
a. photolithographic removal of UV-labile protective groups; or
b. photolithographic removal of acid-labile protective groups, using methods such as photogeneration of acids, photoresist or photoelectrochemistry.

This provides options for the protective group chemistry.

In embodiments,
a. the UV-labile protective groups may be selected from the group consisting of MeNPOC, NVOC, DMBOC, NPPOC, BzNPPOC, SPhNPPOC, and functionally equivalent UV-labile protective groups; or
b. the acid-labile protective groups may be selected from the group consisting of DMT, MMT, and functionally equivalent acid-labile protective groups.

These are suitable protective groups for the respective deprotection mechanisms.

In embodiments, the enzyme suitable for enzymatic nucleotide coupling may be selected from the group consisting of DNA polymerases, RNA polymerases, terminal transferases, and functionally equivalent enzymes capable of catalyzing nucleotide addition. These enzymes efficiently catalyze nucleotide coupling.

In embodiments, the method may further comprise maintaining an inert atmosphere in the vicinity of the substrate during synthesis using an inert gas supply system. This prevents oxidative degradation of reagents.

In embodiments, the method may further comprise controlling the temperature of the substrate during reagent dispensing and light exposure using a temperature control system. This provides optimal conditions for the synthesis.

In embodiments, the method may further comprise a step c) of removing specific copolymerized molecules from the substrate by performing steps iiia) to iiic) to trigger the release of a copolymerized molecule from the substrate, e.g., by cleaving a photosensitive linker attaching the copolymerized molecules to the substrate. This allows specific molecules to be selectively cleaved from the substrate.

Any feature of any embodiment of the sixth aspect may be as correspondingly described in the second aspect. Also, any feature described as being further comprised in the second aspect may also be further comprised in the sixth aspect.

In the seventh aspect, the present invention relates to a system for synthesizing a predetermined library of copolymerized molecules on a substrate, the system comprising:
a. a light source configured to emit exposure light;
b. a programmable light direction unit configured to redirect the exposure light in a programmable exposure pattern on the substrate;
c. a substrate holder configured to hold the substrate;
d. a reagent delivery system comprising one or more dispense units configured to dispense reagents for the synthesis of copolymerized molecules on the substrate;
e. a lateral movement mechanism configured to move the substrate relative to the one or more dispense units, thereby enabling the coating of the substrate with reagents; and
f. a controller configured to:
   i) control the reagent delivery system to dispense a selected reagent onto the substrate using one of the dispense units; subsequently
   ii) control the lateral movement mechanism to move the substrate relative to said one of the dispense units, thereby dispensing the selected reagent onto the substrate; subsequently
   iii) control the lateral movement mechanism to move the substrate to a position where it can be exposed to light of the programmable light direction unit, and subsequently
   iv) control the programmable light direction unit to redirect the exposure light in a predetermined exposure pattern onto the substrate,
wherein the controller is further configured to control the iterative execution of steps i) to v) with varying selected reagents and exposure patterns, in such a way as to synthesize the predetermined library of copolymerized molecules on the substrate (10).

This enables efficient coating of the substrate with reagent.

In embodiments, the system may further comprise a washing unit adapted to wash away unreacted monomers from the substrate (10). Typically, in addition to wash away unreacted monomers, side products from the reaction are also washed away. The washing medium (e.g., solvent) applied by the washing unit is typically adapted to the reactant (e.g., monomer or capping agent) used in the preceding step. In embodiment, the washing unit may be adapted to switch between different washing mediums. This way, different washing media can be used after different steps. This washing unit can, for instance, be comprised in the reagent delivery system. In embodiments, when a washing unit is present, the system may further comprise a drying unit for drying the substrate after the washing step.

In embodiments, the controller (70) may be a controller (70) configured to:
i) control the reagent delivery system (50) to dispense onto the substrate (10) a specific monomer based on the predetermined library; subsequently
ii) control the programmable light direction unit (30) to selectively expose specific regions of the substrate (10) to light according to a predetermined exposure pattern, wherein the exposed regions correspond to locations where the specific monomer is to be incorporated into the copolymerized molecule as specified by the predetermined library; subsequently
iii) control the washing unit to wash away unreacted monomers from the substrate (10); and subsequently
iv) repeat steps i) to iii) with subsequent monomers as specified by the predetermined library until the desired copolymerized molecules are synthesized.

In embodiments, the lateral movement mechanism configured to move the substrate linearly, i.e., in a linear path, under stationary dispense units.

Step iii may comprise selecting an appropriate washing medium.

In embodiments, a step iiib may be present between steps iii and iv, of controlling a drying unit to dry the substrate (10) after washing.

In embodiments, for instance for the synthesis of biomolecules such as polynucleotides, after the monomer addition, light exposure, and washing steps, there may also be a capping step and an oxidation step. Washing is preferably performed after the capping step and also after the oxidation step. An oxidation step helps deblocking the growing copolymer chain when the deblocking is light-induced. If the deblocking is acid-induced, the oxidation step is typically used.

In embodiments, the substrate may be selected from the group consisting of a semiconductor substrate (e.g., a silicon wafer), a silicon oxide substrate, and a glass substrate. These substrates provide a stable surface for synthesis. The substrate may have either a planar surface or a structured surface. A structured surface can include three-dimensional confinements such as wells or three-dimensional projections such as pillars. These structures can help prevent crosstalk during light exposure and/or enhance probe collection.

In embodiments, the lateral movement mechanism (60) may be configured to move the substrate (10) in a reciprocating motion relative to a single dispense unit (400). This enables coating the entire substrate with a single dispense unit.

In embodiments, the multiple dispense units (400) may be arranged in a linear configuration, and the lateral movement mechanism (60) may be configured to move the substrate (10) linearly, i.e., in a linear path, relative to the linearly arranged dispense units (400). This allows coating the substrate in a single pass.

In embodiments, the linearly arranged dispense units (400) may comprise separate units for different steps of a synthesis process. This enables a streamlined synthesis workflow.

In embodiments, the controller may be configured to control the lateral movement mechanism (60) to move the substrate (10) in a predetermined manner relative to the multiple dispense units (400). For instance, if each dispense unit dispenses a different monomer of the copolymerized molecule to be synthesized, the predetermined movement of the substrate may be adapted to sequentially expose the substrate to the different monomers, thereby enabling the synthesis of the copolymerized molecule. This may involve back and forth movement of the substrate.

In embodiments, the system may further comprise one or more programmable light direction units (30) positioned between the linearly arranged dispense units (400) for UV exposure of the substrate (10) at predetermined positions in the linear path.

In embodiments, the multiple dispense units (400) may be arranged according to a non-linear configuration, and the lateral movement mechanism (60) may be configured to move the substrate (10) in a non-linear path relative to the circularly arranged dispense units (400).

In embodiments, the non-linearly arranged dispense units (400) may comprise separate units for different reagents or different steps of the synthesis process.

In embodiments, the system may further comprise one or more programmable light direction units (30) positioned between the non-linearly arranged dispense units (400) for UV exposure of the substrate (10) at predetermined positions in the non-linear path.

For all arrangements of the dispense units (400) (linear or not), the controller may be configured to control the lateral movement mechanism (60) to move the substrate (10) in a predetermined manner relative to the multiple dispense units (400). For instance, if each dispense unit dispenses a different monomer of the copolymerized molecule to be synthesized, the predetermined movement of the substrate may be adapted to sequentially expose the substrate to the different monomers, thereby enabling the synthesis of the copolymerized molecule. This may involve back and forth movement of the substrate along its path.

In embodiments, the multiple dispense units (400) may be arranged in a circular configuration, and the lateral movement mechanism (60) may be configured to move the substrate (10) in a circular path relative to the circularly arranged dispense units (400). This enables a compact system design.

In embodiments, the circularly arranged dispense units (400) may comprise separate units for different reagents or different steps of the synthesis process. This allows optimizing reagent handling.

In embodiments, the system may further comprise one or more programmable light direction units (30) positioned between the circularly arranged dispense units (400) for UV exposure of the substrate (10) at predetermined positions in the circular path. This enables in-line light exposure.

In embodiments, the system (100) may further comprise at least one loading station configured to load and unload substrates (10).

Loading stations enable automated substrate handling.

In embodiments, the system may comprise an independent atmospheric control system configured to maintain a controlled environment.

Atmospheric control prevents side reactions and contamination.

In embodiments, the controlled environment may comprise an atmosphere selected from air, nitrogen, and argon. Nitrogen and argon are inert and readily available.

In embodiments, the system may comprise independent temperature (800) and pressure control systems (810).

Temperature and pressure control enable optimizing reaction conditions.

In embodiments, the system may comprise a dedicated chemical waste collection system (900).

Dedicated waste collection prevents cross-contamination between synthesis steps.

In embodiments, the reagent delivery system (50) may comprise multiple dispense arms (1000), or tubes (1000) configured to dispense different chemicals onto the substrate (10).

Multiple dispense arms enable efficient multi-reagent dispensing.

In embodiments, the system may comprise a pipetting arm (1100) configured to collect specific copolymerized molecules, e.g., polynucleotides, from the substrate surface.

A pipetting arm allows selective harvesting of synthesized molecules.

In embodiments, the controller (70) may be further configured to execute a predetermined sequence of synthesis steps by controlling the reagent delivery system (50), the programmable light direction unit (30), and the lateral movement mechanism according to a predetermined schedule.

Automated control enables executing complex synthesis protocols.

In embodiments, the present invention may relate to a system (100) for synthesizing a predetermined library of biopolymers, wherein the reagent delivery system (50) is configured to dispense reagents for biopolymer synthesis. Examples of biopolymers that can be synthesized include, but are not limited to, polynucleotides (e.g., DNA, RNA, or XNA), and peptides (e.g., proteins). XNA (Xenobiotic nucleic acids) are non-canonical nucleic acid analogs, such as HNA (1,5-Anhydrohexitol nucleic acid), CeNA (Cyclohexene nucleic acid), TNA (Threose nucleic acid), GNA (Glycol nucleic acid), LNA (locked nucleic acid), PNA (peptide nucleic acid), FANA (Fluoroarabino nucleic acid), amongst others.

In embodiments, the present invention may relate to a system (100) for synthesizing a predetermined library of polynucleotides, wherein the reagent delivery system (50) is configured to dispense reagents for polynucleotide synthesis. Polynucleotide-specific reagents enable efficient DNA/RNA/XNA synthesis.

In these embodiments, the substrate may comprise functional groups appropriate for nucleotide addition. This allows for efficient synthesis of polynucleotides.

In embodiments, the functional groups appropriate for nucleotide addition may be selected from the group consisting of hydroxyl groups, amine groups, NHS esters, azide groups, alkyne groups (e.g., dibenzo cyclooctyne (DBCO) groups), biotin, and streptavidin. These functional groups enable different coupling chemistries.

Polynucleotide-specific reagents enable efficient DNA/RNA/XNA synthesis.

In embodiments, the programmable light direction unit (30) may comprise a digital micromirror device (DMD) (30).

DMDs enable high-resolution light patterning with fast switching times.

In embodiments, the lateral movement mechanism (60) may comprise a movable stage supporting the substrate holder (40).

This configuration enables relative movement between the light pattern and substrate.

In embodiments, the system (100) may further comprise an in-situ mixing system configured to combine reagents immediately before dispensing onto the substrate (10).

In-situ mixing prevents reagent degradation and side reactions.

In embodiments, the system (100) may further comprise an end-release mechanism (1900) configured to release synthesized oligonucleotides from the substrate (10).

An end-release mechanism enables harvesting the synthesized molecules.

End-release mechanisms that can be used to release copolymerized molecules from the surface include, but are not limited to, thermal, electric, optical, or chemical actuation, or a combination thereof. In embodiment, the end-release mechanism can be used to release copolymerized molecules attached to the surface by a specific linker molecule sensitive to the actuation mechanism. Preferably, the linker remains stable throughout the synthesis process.

In embodiments, the end-release mechanism may comprise the controller (70) being further configured to control the programmable light direction unit (30), and lateral movement mechanism (60) to cleave a specific binding molecule that attaches the copolymerized molecule to the substrate (10), and do so at a specific location on the substrate surface. This enables spatially-selective harvesting.

In embodiments, the specific binding molecule may be a photosensitive linker. Ence, in embodiments, the end-release mechanism may comprise the controller (70) being further configured to control the programmable light direction unit (30), and lateral movement mechanism (60) to cleave a photosensitive linker for removing specific copolymerized molecules from the substrate (10). This enables spatially-selective harvesting.

In alternative embodiments, the specific binding molecule may be an acid-labile linker, and the cleavage can be performed by e.g., photogeneration of an acid induced by the light of the light direction unit (30).

In embodiments, the light source (20) may be configured to emit exposure light with a peak emission in the range of from 200 to 700 nm, preferably from 330 nm to 400 nm.

These wavelengths enable photochemical reactions without damaging biomolecules.

In embodiments, the light source (20) may be configured to emit exposure light with a spectrum comprising an intensity at 365 nm that is at least 10% of the maximum intensity in the emitted spectrum. This wavelength is suitable for many photolabile protecting groups.

In embodiments, the light source (20) may comprise at least one of a UV-LED (or an array thereof), a mercury arc lamp, or a laser (e.g., a scanning laser such as a 405 nm scanning laser. These are cost-effective high-intensity UV sources.

In embodiments, the programmable light direction unit (30) may comprise a confinement element (2100) comprising a lens such as a Fresnel lens or a zone plate.

Confinement optics enable focusing light to a small spot size.

In embodiments, the system (100) may further comprise a cleaning mechanism (2000) configured to clean the substrate (10) between light exposure and reagent dispensing, wherein the controller (70) is further configured to control the cleaning mechanism (2000).

Cleaning the substrate prevents carry-over contamination between synthesis steps.

In embodiments, the controller (70) may be configured to control the programmable light direction unit (30) and the lateral movement mechanism (60) such that the second predetermined exposure pattern does not overlap with the first predetermined exposure pattern.

For instance, the controller (70) may be configured to control the programmable light direction unit (30) and the lateral movement mechanism (60) such that the second predetermined exposure pattern is shifted relative to the first predetermined exposure pattern by a distance of from 1.5 to 2.5, preferably from 1.8 to 2.2 the wavelength of the exposure light.

Non-overlapping exposure patterns enable enlarging the exposed substrate area.

In embodiments, the controller (70) may be configured to control the programmable light direction unit (30) and the lateral movement mechanism (60) such that the second predetermined exposure pattern is shifted relative to the first predetermined exposure pattern by less than the smallest distance between two exposure spots in the first predetermined exposure pattern.

Sub-spot shifting enables increasing the density of exposed features. Solutions of the prior art are constrained by the density limits of the reagent dispensing system. Here, we take a radically different approach.

For instance, the controller (70) may be configured to control the programmable light direction unit (30) and the lateral movement mechanism (60) such that the second predetermined exposure pattern is shifted relative to the first predetermined exposure pattern by a distance of from 0.5 to 0.9 times the smallest distance between two exposure spots in the first predetermined exposure pattern. The smallest distance between two illuminated areas (or spots) may for instance be from 0.8 to 1.5 times, preferably from 0.9 to 1.2 times the wavelength of the exposure light.

In embodiments, the system (100) may further comprise a temperature control mechanism configured to maintain the substrate (10) at a predetermined temperature during reagent dispensing and light exposure, wherein the controller (70) is further configured to control the temperature control mechanism.

Temperature control enables optimizing reaction kinetics and specificity.

In embodiments, the reagent delivery system (50) may comprise multiple reagent reservoirs, each configured to contain a different monomer for copolymerized molecule synthesis.

Dedicated monomer reservoirs prevent cross-contamination.

In embodiments, the system (100) may further comprise an inert gas supply system configured to maintain an inert atmosphere in the vicinity of the substrate (10) during synthesis, wherein the controller (70) is further configured to control the inert gas supply system.

An inert atmosphere prevents unwanted oxidation reactions.

Any feature of any embodiment of the seventh aspect may be as correspondingly described in the first aspect. Also, any feature described as being further comprised in the first aspect may also be further comprised in the seventh aspect.

In the eighth aspect, the present invention relates to a method for synthesizing a predetermined library of copolymerized molecules on a substrate based on a predetermined library design, the method comprising:
a. providing a system according to the seventh aspect having a substrate in the substrate holder, subsequently,
b. iteratively synthesizing the copolymerized molecules at synthesis sites on the substrate by repeating the following steps until the predetermined library is complete:
   i) selecting a specific monomer from a predefined set of monomers, wherein the selection is based on the predetermined library design; subsequently
   ii) controlling the reagent delivery system to dispense the selected monomer onto the substrate using one of the dispense units; subsequently
   iii) controlling the lateral movement mechanism to move the substrate relative to said one of the dispense units, thereby dispensing the selected monomer onto the substrate; subsequently
   iv) controlling the lateral movement mechanism to move the substrate to a position where it can be exposed to light of the programmable light direction unit; subsequently
   v) activating some of the dispensed monomers by controlling the programmable light direction unit to redirect the exposure light in a predetermined exposure pattern onto the substrate, wherein the exposed regions represent locations where the current monomer should be incorporated into a copolymerized molecule according to the predetermined library design; subsequently
   vi) washing away unreacted monomers from the substrate; and
   vii) repeating steps i-vi with subsequent monomers as specified by the predetermined library design until the desired copolymerized molecules are completed.

This enables high-throughput synthesis with efficient reagent coating.

In embodiments, the system provided in step a) may be a system according to the seventh aspect and wherein step b is performed by operating the controller. This simplifies the synthesis process.

In embodiments, the copolymerized molecules may be nucleic acid polynucleotides. This enables synthesis of nucleic acid libraries.

In embodiments, selectively exposing specific regions of the substrate to light may activate nucleotide addition in growing nucleic acid polynucleotides, wherein the activation is either direct or indirect. This enables light-directed synthesis.

In embodiments, the activation of nucleotide addition may comprise at least one of:
i) removal of protective groups for a subsequent nucleotide addition, or
ii) activation or uncaging of an enzyme for subsequent addition of nucleotides.

This provides two alternative routes for light-activated synthesis.

In embodiments,
a. when the activation involves removal of protective groups, the nucleotide addition may be performed using phosphoramidite chemistry; and
b. when the activation involves activation or uncaging of an enzyme, the nucleotide addition may involve enzymatic nucleotide coupling.

This matches the activation mechanism to the appropriate synthesis chemistry.

In embodiments, the removal of protective groups may comprise:
a. photolithographic removal of UV-labile protective groups; or
b. photolithographic removal of acid-labile protective groups, using methods such as photogeneration of acids, photoresist or photoelectrochemistry.

This provides options for the protective group chemistry.

In embodiments,
a. the UV-labile protective groups may be selected from the group consisting of MeNPOC, NVOC, DMBOC, NPPOC, BzNPPOC, SPhNPPOC, and functionally equivalent UV-labile protective groups; or
b. the acid-labile protective groups may be selected from the group consisting of DMT, MMT, and functionally equivalent acid-labile protective groups.

These are suitable protective groups for the respective deprotection mechanisms.

In embodiments, the enzyme suitable for enzymatic nucleotide coupling may be selected from the group consisting of DNA polymerases, RNA polymerases, terminal transferases, and functionally equivalent enzymes capable of catalyzing nucleotide addition. These enzymes efficiently catalyze nucleotide coupling.

In embodiments, the method may further comprise maintaining an inert atmosphere in the vicinity of the substrate during synthesis using an inert gas supply system. This prevents oxidative degradation of reagents.

In embodiments, the method may further comprise controlling the temperature of the substrate during reagent dispensing and light exposure using a temperature control system. This provides optimal conditions for the synthesis.

In embodiments, the method may further comprise a step c) of removing specific copolymerized molecules from the substrate by performing steps iiia) to iiic) to trigger the release of a copolymerized molecule from the substrate, e.g., by cleaving a photosensitive linker attaching the copolymerized molecules to the substrate. This allows specific molecules to be selectively cleaved from the substrate.

Any feature of any embodiment of the eighth aspect may be as correspondingly described in the second aspect.

In a further aspect, the present invention relates to a computer program comprising instructions to cause the system of the first aspect to execute the steps of the method of the second aspect.

In yet a further aspect, the present invention relates to a computer-readable medium having stored thereon the computer program of said further aspect.

In a further aspect, the present invention relates to a computer program comprising instructions to cause the system of the third aspect to execute the steps of the method of the fourth aspect. In yet a further aspect, the present invention relates to a computer-readable medium having stored thereon the computer program of said further aspect.

In another aspect, the present invention relates to a computer program comprising instructions to cause the system of the fifth aspect to execute the steps of the method of the sixth aspect. In yet another aspect, the present invention relates to a computer-readable medium having stored thereon the computer program of said another aspect.

In an additional aspect, the present invention relates to a computer program comprising instructions to cause the system of the seventh aspect to execute the steps of the method of the eighth aspect. In yet an additional aspect, the present invention relates to a computer-readable medium having stored thereon the computer program of said additional aspect.

It is an advantage of embodiments of the present invention that a system for synthesizing a predetermined library of copolymerized molecules on a substrate can be provided that enables high-throughput synthesis of complex libraries. It is a further advantage of embodiments of the present invention that the system can utilize a programmable light direction unit to selectively activate specific regions of the substrate for monomer incorporation, allowing precise control over the synthesis of each copolymerized molecule in the library according to a predetermined design and avoiding crosstalk.

It is an additional advantage of embodiments of the present invention that the system can include a lateral movement mechanism to generate relative movement between the programmable light direction unit and the substrate, enabling the exposure pattern to be shifted to either enlarge the exposed substrate area or increase the density of synthesis sites on the substrate, or both. It is also an advantage of embodiments of the present invention that the system can incorporate a multi-chamber configuration, with separate chambers optimized for different steps in the synthesis process, improving efficiency and throughput.

A multichamber system, even without a lateral movement mechanism to generate relative movement between the programmable light direction unit and the substrate, addresses several challenges in the synthesis of copolymerized molecule libraries compared to a single chamber system. Each chamber can be optimized for its specific function, whether it's light exposure, reagent dispensing, or substrate cleaning, leading to improved performance and reliability for each step of the synthesis process. This separation of processes into distinct chambers also minimizes the risk of cross-contamination between reagents or different stages of the synthesis, which is advantageous for maintaining the purity and integrity of the synthesized molecules. The multichamber design allows for precise control of environmental conditions in each chamber, accommodating the potentially different requirements for temperature, humidity, or inert atmosphere at various stages of synthesis. It also enables more efficient management and conservation of expensive or sensitive reagents, potentially reducing waste and operational costs. The flexibility offered by a multichamber system in designing and optimizing the synthesis workflow is another key advantage, as processes can be easily rearranged or modified by changing the sequence in which the substrate moves through the chambers. Additionally, maintenance or repairs can often be performed on one chamber while others continue to operate, minimizing downtime and improving overall system efficiency. These advantages collectively contribute to solving the problems of increasing different oligonucleotides per synthesis run, reducing reagent costs per synthesis cycle, and increasing throughput by optimizing operation time for each synthesis step.

It is another advantage of embodiments of the present invention that the system can utilize a process chamber with multiple levels and a vertical movement mechanism, allowing the substrate to be moved between levels optimized for reagent dispensing and light exposure.

A multilevel system, even without a lateral movement mechanism to generate relative movement between the programmable light direction unit and the substrate, offers several advantages over a single level system in the synthesis of copolymerized molecule libraries. This design approach addresses key challenges in the synthesis process by optimizing space utilization and process efficiency.

In a multilevel system, different stages of the synthesis process are vertically stacked, allowing for a more compact overall system design. This vertical arrangement enables the system to perform multiple steps of the synthesis process in a sequential manner without requiring horizontal movement between separate chambers. For example, the top level might be dedicated to light exposure, while lower levels could be used for reagent dispensing, washing, or other process steps.

This vertical integration of process steps solves several problems compared to a single level system. It significantly reduces the overall footprint of the synthesis apparatus, which is particularly advantageous in laboratory or manufacturing environments where space is at a premium. The compact design can lead to shorter travel distances for the substrate between process steps, potentially reducing the time required for substrate transfer and thereby increasing overall throughput.

The multilevel approach also allows for gravity-assisted fluid handling, which can be particularly beneficial for reagent dispensing and waste removal. This can lead to more efficient use of reagents and potentially reduce the complexity of the fluid handling systems required.

The vertical arrangement also offers flexibility in process design. By adjusting the dwell time at each level or modifying the sequence of vertical movements, the synthesis protocol can be fine-tuned without requiring major changes to the system layout. This adaptability is valuable for optimizing the synthesis of different types of copolymerized molecule libraries.

While a multilevel system without lateral movement may not offer the same degree of spatial addressability as systems with complex x-y positioning capabilities, it still provides a solution for increasing throughput, improving process control, and enhancing overall system efficiency in a compact form factor. These benefits directly address the challenges of increasing the number of different oligonucleotides per synthesis run and reducing operation time per synthesis cycle.

It is another advantage of embodiments of the present invention that the system can utilize a lateral movement mechanism configured to move the substrate relative to the one or more dispense units, thereby enabling the coating of the substrate with reagents. A system where the lateral movement mechanism is used to move the substrate relative to the dispense units for reagent coating, independently whether or not it is also used for generating relative movement between the programmable light direction unit and the substrate holder, addresses specific challenges in the synthesis of copolymerized molecule libraries.

This configuration primarily solves the problem of efficient and uniform reagent distribution across the substrate surface. By enabling controlled movement of the substrate relative to the dispense units, the system can achieve more precise and even coating of reagents. This is advantageous for ensuring consistent synthesis conditions across the entire substrate, which is advantageous for producing high-quality, uniform libraries of copolymerized molecules.

The use of lateral movement for reagent coating allows for various dispensing strategies that can optimize reagent usage and coverage. For instance, it enables techniques like line coating, where the substrate moves linearly under stationary dispense units. These methods can significantly improve reagent spreading and uniformity compared to static dispensing.

This approach also addresses the challenge of reagent economy. By precisely controlling the movement of the substrate during reagent application, the system can minimize reagent waste. This is particularly advantageous when working with expensive or limited-quantity reagents, as it ensures that the maximum amount of reagent is effectively used for synthesis.

Furthermore, this configuration can increase the overall throughput of the synthesis process. By optimizing the reagent coating step, the system reduces the time required for this phase of synthesis. This contributes to shortening the overall operation time per synthesis cycle.

It is also an advantage of embodiments of the present invention that the controller can be configured to automate the synthesis process by controlling the coordination of the reagent delivery, substrate movement, and light exposure according to the predetermined library design.

Particular and preferred aspects of the invention are set out in the accompanying independent and dependent claims. Features from the dependent claims may be combined with features of the independent claims and with features of other dependent claims as appropriate and not merely as explicitly set out in the claims.

The above and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

### Brief description of the drawings

Here are the brief descriptions for each figure based on the inventor's input and following the specified format:
Fig. 1 is a schematic representation of elements of a system for synthesizing a predetermined library of copolymerized molecules on a substrate according to embodiments of the present invention.
Fig. 2 is a block diagram of a system for synthesizing a predetermined library of copolymerized molecules on a substrate according to embodiments of the present invention.
Fig. 3 is a block diagram of a system for synthesizing a predetermined library of copolymerized molecules on a substrate comprising a multichamber system according to embodiments of the present invention.
Fig. 4 is a block diagram of a system for synthesizing a predetermined library of copolymerized molecules on a substrate comprising a multichamber and multilevel system according to embodiments of the present invention.
Fig. 5 is a block diagram of a system for synthesizing a predetermined library of copolymerized molecules on a substrate comprising a multilevel system according to embodiments of the present invention.
Fig. 6 is a schematic representation of elements of a system for synthesizing a predetermined library of copolymerized molecules on a substrate wherein the lateral movement mechanism is configured to move the substrate relative to the dispense units according to embodiments of the first and seventh aspect of the present invention.
Fig. 7 is a schematic representation of a system for synthesizing a predetermined library of copolymerized molecules on a substrate wherein the lateral movement mechanism is configured to move the substrate in a circular path relative to circularly arranged dispense units according to embodiments of the first and seventh aspect of the present invention.
Fig. 8 is a block diagram of a system for synthesizing a predetermined library of copolymerized molecules on a substrate comprising a multichamber system according to embodiments of the third aspect of the present invention.
Fig. 9 is a block diagram of a system for synthesizing a predetermined library of copolymerized molecules on a substrate comprising a multichamber and multilevel system according to embodiments of the fifth aspect of the present invention.
Fig. 10 is a block diagram of a system for synthesizing a predetermined library of copolymerized molecules on a substrate comprising a multilevel system according to other embodiments of the fifth aspect of the present invention.

In the different figures, the same reference signs refer to the same or analogous elements.

### Detailed description of Illustrative Embodiments

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention.

The following terms are provided solely to aid in the understanding of the invention.

As used herein, and unless otherwise specified, the term "substrate" refers to a solid surface on which copolymerized molecules, such as biomolecules, can be synthesized. For instance, this synthesis can be achieved e.g., through phosphoramidite coupling, peptide coupling, click-chemistry induced molecule coupling, self-assembled monolayers, other methods that form a covalent bond or leverage physical forces. Examples of substrates include, but are not limited to, semiconductor substrates (e.g., silicon wafers), silicon oxide substrates, and glass substrates.

As used herein, and unless otherwise specified, the term "copolymerized molecules" refers to molecules comprising two or more different type of monomers chemically linked together by consistent types of chemical bounds.. They can, for instance, be the result of the copolymerization of said two or more monomers or the result of the binding together of oligomers or fragments, themselves being the result of the copolymerization of said two or more monomers. Examples of copolymerized molecules include, but are not limited to, nucleic acid polynucleotides, peptides, proteins, and synthetic copolymers.

As used herein, and unless otherwise specified, the term "predetermined library of copolymerized molecules" refers to a collection of copolymerized molecules, where the sequence, composition, and/or structure of each molecule in the collection is predetermined and specifically designed prior to synthesis. The predetermined nature of the library indicates that the sequences are not random, but rather intentionally designed for specific purposes. This predetermination is compatible with and facilitated by the programmable nature of the synthesis process, which allows for flexible and precise control over the molecule creation. The library may contain a plurality of molecular sequences, , potentially ranging from hundreds to trillions of distinct molecules, synthesized on a single substrate. Typically, the plurality of molecular sequences comprise at least two different molecular sequences. In some cases, all of these sequences may be different from one another. The predetermined nature of the library allows for but is not limited to the creation of complex, diverse collections of molecules tailored for specific applications, such as gene synthesis, drug discovery, or data storage. Oligonucleotide libraries may be used in areas such as antibody discovery, digital data storage, synthetic biology for gene editing platforms, and gene and genome synthesis. These libraries may be used directly in the format of well plates, microarrays or other arrangements. Additionally, the synthesized oligonucleotides can be assembled into more complex molecules, such as genes, genomes or other nanostructures.

As used herein, and unless otherwise specified, the term "light source configured to emit exposure light" refers to a device or assembly of components capable of generating and emitting light of a wavelength suitable for initiating or controlling chemical reactions involved in the synthesis of copolymerized molecules on a substrate. This light source comprises the primary light-emitting devices-such as UV-LEDs, mercury (Hg) arc lamps, lasers, or other light-emitting devices capable of producing light, preferably comprising a wavelength of 365 nm-and also any associated optical components that modify or condition the emitted light to achieve the desired beam characteristics. Such optical components may comprise spatial filters and collimating lenses, amongst others. The exposure light emitted by this light source is used in conjunction with the programmable light direction unit to selectively activate or deactivate specific areas on the substrate, thereby controlling the synthesis of the predetermined library of copolymerized molecules. As used herein, and unless otherwise specified, the term "programmable light direction unit" refers to a device or assembly of components configured to modulate and redirect exposure light into programmable exposure patterns on the substrate. The programmable light direction unit may also additionally focus the light. This unit includes, but is not limited to, devices such as Digital Micromirror Devices (DMDs) that modulate the light pattern. It also encompasses any associated optical components necessary for shaping, directing, and focusing the modulated light onto the substrate with high precision. Such optical components may include focusing mechanisms like zone plates, Fresnel lenses, or other confinement optics that adjust the size, convergence, and focal point of the light beam. The programmable light direction unit works in conjunction with the controller to selectively activate or deactivate specific areas on the substrate according to the desired synthesis patterns.

As used herein, and unless otherwise specified, the phrase "configured to redirect the exposure light in a programmable exposure pattern on the substrate" refers to the capability of a device, such as the programmable light direction unit, to control the distribution of exposure light onto specific areas of the substrate. This functionality allows for the creation of illumination patterns that can be changed between synthesis steps, e.g., in between monomer additions. The programmable exposure pattern may be achieved through various means, including but not limited to, the use of digital micromirror devices (DMDs), spatial light modulators, or other micro-electro-mechanical systems (MEMS) that can modify the direction of incident light. This capability enables the selective activation or deactivation of specific synthesis sites on the substrate, thereby controlling the growth of copolymerized molecules according to the predetermined library design.

As used herein, and unless otherwise specified, the term "substrate holder" refers to a device or mechanism designed to support the substrate during the synthesis of copolymerized molecules. Preferably, the substrate holder secures the position of the substrate relative to the holder during the synthesis. The substrate holder may be configured to maintain the substrate in a stable position while allowing for precise movement relative to other components of the system, such as the programmable light direction unit and the reagent delivery system. It may incorporate features to enable alignment or to set the temperature of the substrate. In embodiment, the substrate holder may be designed to accommodate a substrate of 30 cm diameter such as a full silicon wafer. It may also be integrated with or coupled to the lateral movement mechanism and/or vertical movement mechanism to enable controlled positioning of the substrate throughout the synthesis process.

As used herein, and unless otherwise specified, the term "reagent delivery system configured to dispense reagents for the synthesis of copolymerized molecules on the substrate" refers to a component or set of components designed to apply chemical reagents onto the substrate surface during the synthesis process. This system may comprise one or more dispense units, such as inkjet printheads, pipettes, tubes, nozzles, dispense arms, or other fluid dispensing mechanisms, along with associated fluid handling units such as reservoirs, pumps, filters, valves, purification compartments, and control systems. The reagent delivery system may be capable of dispensing precise volumes of various reagents, including but not limited to nucleotide monomers, amino acids, coupling agents, and washing solutions, as required by the synthesis protocol. It may employ techniques such as spin-coating, droplet dispensing, or flow-based methods. It may ensure uniform coverage of reagents across the substrate surface. The system may be designed to work in coordination with other components of the synthesis apparatus, such as the programmable light direction unit and the lateral movement mechanism, to enable the stepwise construction of the predetermined library of copolymerized molecules on the substrate.

As used herein, and unless otherwise specified, the term "lateral movement mechanism" refers to a mechanism configured to generate relative lateral movement between the substrate holder and either the programmable light direction unit or one or more dispense units, or both. Examples of lateral movement mechanisms configured to generate relative lateral movement between the substrate holder and the programmable light direction unit include, but are not limited to, a movable stage supporting the substrate holder, a movable arm supporting the programmable light direction unit, or a combination of both a movable stage and a movable arm. An example of lateral movement mechanisms configured to generate relative lateral movement between the substrate holder and the one or more dispense units include, but is not limited to, a movable stage supporting the substrate holder.

As used herein, and unless otherwise specified, the term "controller" refers to a device, system, or combination of hardware and software components designed to control, e.g., coordinate and manage, the operations of various elements within the copolymerized molecule synthesis system. The controller is typically a programmable electronic device, such as a microprocessor-based system, capable of executing instructions to control the actions of the system components. Its functions may include one or more of the following, but are not limited to: Controlling the reagent delivery system to dispense selected reagents onto the substrate at appropriate times and locations; Managing the programmable light direction unit to generate specific exposure patterns on the substrate; Coordinating the lateral movement mechanism, if present, to create relative movement between the programmable light direction unit and the substrate holder; Synchronizing the timing and sequence of various synthesis steps, including reagent dispensing, light exposure, and substrate movement; Processing and executing predefined synthesis protocols for creating the predetermined library of copolymerized molecules; Monitoring and adjusting system parameters to maintain optimal synthesis conditions; Interfacing with user input devices and displaying system status and progress information. The controller may also be configured to adapt synthesis parameters based on feedback from sensors or quality control mechanisms within the system, ensuring the accurate and efficient production of the predetermined library of copolymerized molecules.

As used herein, and unless otherwise specified, the phrase "control the reagent delivery system to dispense a selected reagent on the substrate" refers to the controller's function of managing and directing the operations of the reagent delivery system to apply specific chemical reagents onto the substrate surface, e.g., at predetermined times, during the synthesis process. This control may encompass one or more of the following and preferably encompass all of the following: selecting the appropriate reagent from available options based on the current step in the synthesis protocol, determining the precise timing for reagent dispensing in coordination with other synthesis steps, specifying the quantity of reagent to be dispensed, and mixing one or more reagents. The quantity to be dispensed may vary depending on the substrate size, reaction requirements, or specific synthesis protocol. It may also involve one or more, and preferably all of the following: directing the positioning of dispense units or nozzles relative to the substrate to ensure proper reagent distribution; activating and deactivating pumps, valves, or other mechanisms within the reagent delivery system to initiate and terminate reagent flow; and coordinating reagent dispensing with substrate movement or rotation, if applicable, to achieve uniform coverage. The controller may also monitor and adjust dispensing parameters in real-time to maintain consistency and accuracy throughout the synthesis process. This control function may ensure that the correct reagents are applied to the substrate in the proper sequence, quantities, and locations. This is advantageous for the accurate synthesis of the predetermined library of copolymerized molecules.

As used herein, and unless otherwise specified, the phrase "control the programmable light direction unit to redirect the exposure light in a first predetermined exposure pattern onto the substrate" refers to the controller's function of controlling, e.g., managing and directing, the operations of the programmable light direction unit to selectively illuminate specific areas of the substrate surface according to a predefined pattern. This control may involve sending precise instructions to the programmable light direction unit, such as a digital micromirror device (DMD) or other micro-electro-mechanical system, to adjust its individual elements in a way that creates the desired light pattern on the substrate. The controller may determine the timing, duration, and intensity of the light exposure. This may be done to ensure it aligns with the current step in the synthesis protocol and coordinates with other system operations, such as reagent dispensing and substrate movement. Each predetermined exposure pattern (e.g., the first, second, or a subsequent one) is a specific arrangement of illuminated and non-illuminated areas on the substrate, designed to activate or deactivate particular synthesis sites according to the requirements of the copolymerized molecule library being synthesized. This controlled light patterning enables the selective growth of molecules at specific locations on the substrate, forming the basis for the spatial organization of the predetermined library of copolymerized molecules. The smallest distance between two illuminated areas (or spots) may for instance be from 0.8 to 1.5 times, preferably from 0.9 to 1.2 times the wavelength of the exposure light.

As used herein, and unless otherwise specified, the phrase "control the lateral movement mechanism to generate relative lateral movement between the programmable light direction unit and the substrate holder, and change the configuration of the programmable light direction unit so that it becomes adapted to redirect the exposure light in a second predetermined exposure pattern, different from the first one, onto the substrate" refers to the controller's function of coordinating two distinct but related operations. First, it manages the lateral movement mechanism to create precise, controlled movement in the horizontal plane between the programmable light direction unit and the substrate holder. This movement may involve shifting the substrate holder, the programmable light direction unit, or both, to position new areas of the substrate for exposure. Previously, simultaneously, or subsequently, the controller instructs the programmable light direction unit to reconfigure its elements, such as adjusting the orientations of micromirrors in a digital micromirror device, to create a new light pattern. This second predetermined exposure pattern is distinct from the first and is designed so that the second predetermined exposure pattern does not overlap with the first predetermined exposure pattern or so that the second predetermined exposure pattern is shifted relative to the first predetermined exposure pattern by less than the smallest distance between two exposure spots in the first predetermined exposure pattern. The combination of lateral movement and pattern reconfiguration allows the system to efficiently synthesize complex libraries of copolymerized molecules enabling the coverage of the entire substrate surface, enabling high-density, or both.

As used herein, and unless otherwise specified, the term "process chamber" refers to an enclosed space in which one or more steps of the copolymerized molecule synthesis process can be performed. Examples of process chambers include, but are not limited to, chambers for reagent dispensing, chambers for light exposure, chambers for substrate cleaning, or chambers combining two or more of these functions.

As used herein, and unless otherwise specified, the term "light exposure chamber" refers to a process chamber that comprises the programmable light direction unit for exposing the substrate to light in a predetermined pattern.

As used herein, and unless otherwise specified, the term "transfer mechanism" refers to a mechanism configured to move the substrate between different process chambers. The transfer mechanism may be separate from or comprised in the lateral movement mechanism.

As used herein, and unless otherwise specified, the term "level" refers to a horizontal plane within a process chamber at which specific steps of the synthesis process can be performed. Examples of levels include, but are not limited to, levels for reagent dispensing, levels for light exposure or levels combining both.

As used herein, and unless otherwise specified, the term "vertical movement mechanism" refers to a mechanism configured to move the substrate holder vertically between different levels within a process chamber.

As used herein, and unless otherwise specified, the term "dispense unit" refers to a component or device within the reagent delivery system that is configured to apply controlled quantities of reagents onto the substrate surface during the synthesis of copolymerized molecules. A dispense unit may take various forms, such as an inkjet printhead, a pipette, a nozzle, or a fluid ejection mechanism. It may be capable of delivering specific volumes of liquid reagents, which may include nucleotide monomers, amino acids, coupling agents, washing solutions, or other chemicals required for the synthesis process. In embodiments, the dispense unit can be controlled to release reagents in specific quantities, and at precise locations on the substrate, often working in coordination with the substrate's movement or rotation. It may incorporate features for maintaining reagent purity, preventing cross-contamination between different reagents, and ensuring consistent droplet or stream formation. Multiple dispense units may be employed within a single system, each dedicated to specific reagents or functions. This facilitates efficient and accurate synthesis of the predetermined library of copolymerized molecules.

As used herein, and unless otherwise specified, the phrase "the lateral movement mechanism is further configured to move the substrate relative to the one or more dispense units, so as to enable the coating of the substrate with reagents" refers to an additional functionality of the lateral movement mechanism within the synthesis system. This configuration allows the lateral movement mechanism to precisely control the position of the substrate in relation to the dispense units of the reagent delivery system. By enabling this relative movement, the system can achieve uniform and controlled coating of reagents across the entire substrate surface. This movement may involve translating the substrate beneath stationary dispense units, moving the dispense units over a stationary substrate, or a combination of both. The motion can be continuous, stepped, or follow specific patterns optimized for even reagent distribution. This capability facilitates various reagent application methods, such as line coating, or spot dispensing, ensuring that each area of the substrate receives the appropriate type and quantity of reagents necessary for the synthesis of the predetermined library of copolymerized molecules. The coordination between the lateral movement mechanism and the dispense units allows for efficient use of reagents, minimizes waste, and contributes to the overall precision and reliability of the synthesis process.

As used herein, and unless otherwise specified, the term "end-release mechanism" refers to a mechanism configured to release synthesized copolymerized molecules from the substrate. It can also be referred to as a copolymerized molecule release mechanism. An example of an end-release mechanism is the controller being further configured to control the programmable light direction unit and lateral movement mechanism, and optionally also the reagent delivery mechanisms, to cleave a photosensitive linker for removing specific copolymerized molecules from the substrate. Further end-release mechanisms might comprise thermal, electric or chemical actuation.

As used herein, and unless otherwise specified, the term "cleaning mechanism" refers to a mechanism configured to clean the substrate between light exposure and subsequent reagent dispensing steps. Examples of cleaning mechanisms include, but are not limited to, devices for applying solvents, washing solutions, or gases to the substrate surface, or devices for immersing the substrate in those.

As used herein, and unless otherwise specified, the term "inert atmosphere" refers to an environment in which the concentration of reactive gases, such as oxygen and moisture, is maintained sufficiently low to prevent unwanted reactions during the synthesis process. For instance, it can be less than 1 part per million (ppm) of oxygen and less than 1 ppm of water vapor.

As used herein, and unless otherwise specified, the term "subsequently" indicates that an event happens after another event, but it doesn't necessarily indicate that it happens directly afterward or as an immediate consequence. It just refers to a later event in the sequence but allows for other steps or time to pass in between. Each time that "subsequently" is used herein, a more specific embodiment where "subsequently" is replace by "directly after" also forms part of the present invention.

Examples of inert atmospheres include, but are not limited to, nitrogen, argon, and any other gas or mixture of gases that does not adversely affect the synthesis of copolymerized molecules.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

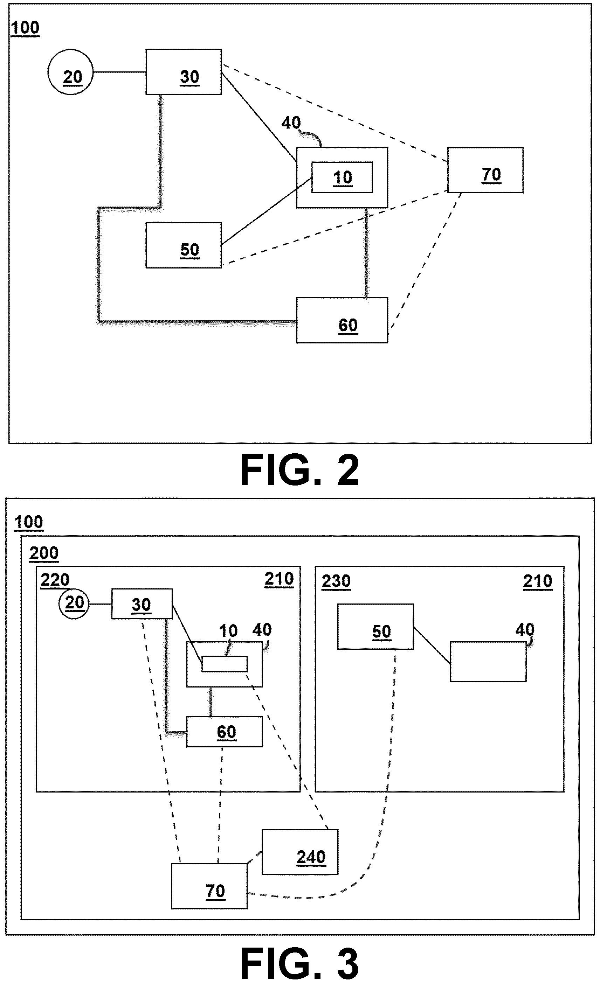

In the first aspect, the present invention relates to a system (100) for synthesizing a predetermined library of copolymerized molecules on a substrate (10). As illustrated in Figure 2, a block diagram of the system (100) highlights the core components, including the substrate (10), light source (20), programmable light direction unit (30), substrate holder (40), reagent delivery system (50), lateral movement mechanism (60), and controller (70).

The diagram emphasizes the interconnectedness of these elements, showcasing how they work together to facilitate the synthesis of copolymerized molecules.

The system comprises a light source (20) configured to emit exposure light, a programmable light direction unit (30) configured to redirect the exposure light in a programmable exposure pattern on the substrate (10), a substrate holder (40), a reagent delivery system (50) configured to dispense reagents for the synthesis of copolymerized molecules on the substrate (10), a lateral movement mechanism (60) configured to generate relative lateral movement between the programmable light direction unit (30) and the substrate holder (40), and a controller (70) configured to control the various components of the system.

In embodiments, the substrate may comprise functional groups appropriate for nucleotide addition, allowing for efficient synthesis of polynucleotides. These functional groups may include hydroxyl groups, azide groups, and dibenzo cyclooctyne (DBCO) groups, enabling different coupling chemistries. The substrate may be selected from semiconductor substrates (e.g., silicon wafers), silicon oxide substrates, and glass substrates, providing a stable surface for synthesis. The substrate may have either a planar surface or a structured surface. A structured surface can include three-dimensional confinements such as wells or three-dimensional projections such as pillars. These structures can help prevent crosstalk during light exposure and/or enhance probe collection.

In embodiments, the system may use a 200mm or 300mm semiconductor wafer as the substrate, allowing for a large surface area for massively parallel oligonucleotide synthesis.

In embodiments, as illustrated in Figure 3, the present invention relates to a system (100) further comprising a multi-chamber system (200) with at least two process chambers (210). The multi-chamber system (200) is depicted, illustrating the arrangement of process chambers (210) designated for specific synthesis steps. Each process chamber (210) comprises a substrate holder (40), and at least a first process chamber (220), designated as a light exposure chamber, includes the programmable light direction unit (30) and the lateral movement mechanism (60). The reagent delivery system (50) is configured to dispense reagents in at least a second process chamber (230), different from the first process chamber (220). A transfer mechanism (240) is configured to move the substrate (10) between any of the process chambers (210). The transfer mechanism (240) facilitates the movement of the substrate (10) between these chambers, allowing for the sequential addition of polymerization reagents (such as nucleotide reagents) and exposure to light.

This multi-chamber configuration enables parallelization and optimization of the different synthesis steps.

In embodiments, the multi-chamber system (200) may comprise between 2 and 100 process chambers (210), allowing for scalable throughput as needed.

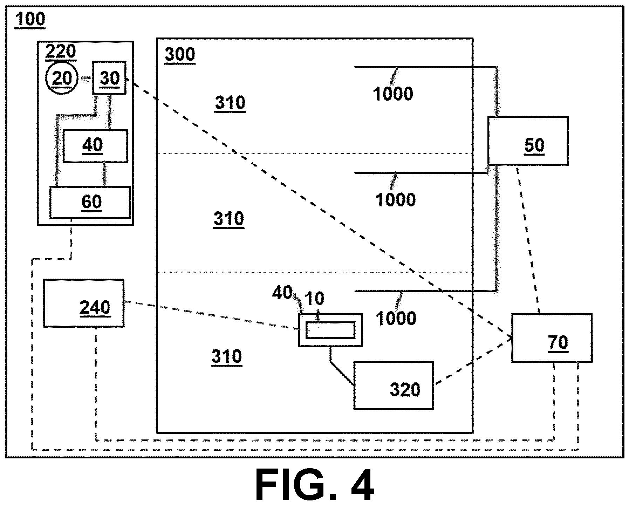

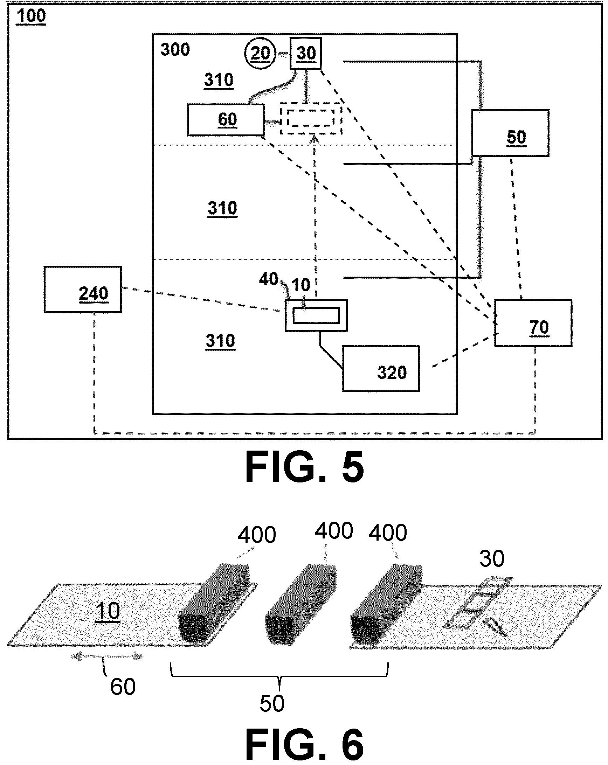

In embodiments, as illustrated in Figures 4 and 5, the first aspect of the present invention relates to a system (100) further comprising a process chamber (300) having multiple levels (310) and a vertical movement mechanism (320) configured to move the substrate holder (40) vertically between the levels (310). The reagent delivery system (50) is configured to dispense reagents at least at one level (310), enabling a compact system design. In Figure 4, the multilevel system is depicted wherein the light direction unit (30) is in a separate chamber (220), showcasing the arrangement of multiple process chambers (220, 300) and the vertical movement mechanism (320) that allows for efficient processing of the substrate (10) through different stages of the synthesis process. A transfer mechanism (240) is configured to move the substrate (10) between any of the process chambers (210).

Referring to Figure 5, elements of the system (100) are illustrated in the case where the light direction unit is in the same chamber (300) as the reagent delivery system (50), showcasing the arrangement of its key components. The light source (20) emits exposure light, which is redirected by the programmable light direction unit (30) onto the substrate (10) held by the substrate holder (40). The substrate holder (40) is positioned within a process chamber (300), which is divided into multiple levels (310). The vertical movement mechanism (320) allows for vertical movement of the substrate holder (40) between these levels (310). The reagent delivery system (50) dispenses reagents onto the substrate (10), while the lateral movement mechanism (60) ensures precise positioning for light exposure. The controller (70) manages the operations of the system, coordinating the dispensing of reagents, exposure to light patterns, and movement of the substrate.

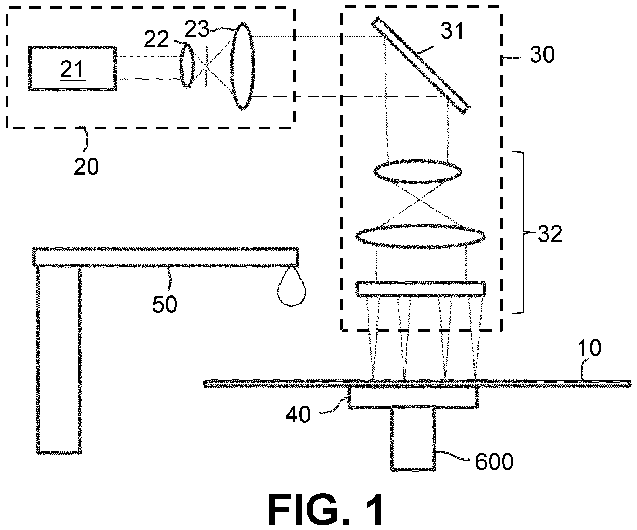

In embodiments, as illustrated in Figure 1 for some of its features, the present invention relates to a system wherein at least one process chamber or level comprises a spinning mechanism (600) configured to rotate the substrate holder (40). The controller (not shown) is further configured to control the spinning mechanism (600) and the reagent delivery system (50) to dispense reagent on the substrate on the substrate holder. This is advantageous as it enables uniform reagent spreading using minimal volumes. In particular, Figure 1 illustrates elements of a system for synthesizing a predetermined library of copolymerized molecules on a substrate (10), as defined in embodiments of the first aspect. In this figure, a light source (20) is shown. Here it is a primary light-emitting device (21) emitting UV light at 365 nm, a spatial filter (22), and a collimating lens (23). This light source (20) is responsible for providing the exposure light used in the photochemical synthesis on the substrate (10). The system's light source (20), may for instance, comprise as primary light-emitting device (21) a UV-LED or mercury arc lamp, suitable for UV emission at wavelengths that can initiate photochemical reactions without damaging biomolecules. The exposure light from the light source (20) is directed towards a programmable light direction unit (30), which in this case is illustrated as a Spatial Light Modulator (SLM 31), such as a DMD (31), and a focusing mechanism (32). The SLM serves to modulate and redirect the light into specific exposure patterns on the substrate (10) during the copolymerization process. This component adjusts the exposure light to produce the desired pattern, as per the first aspect describing different exposure patterns controlled by the system's controller (70). The light passes through a focusing mechanism (32), which may include a zone plate array, or confinement optics such as Fresnel lenses, to focus the light into a series of spots, ensuring precise control over the light's interaction with the substrate. The substrate (10) is held in place by a substrate holder (40), depicted here as mounted on a spin-coating stage, i.e., a spinning mechanism (600). This stage can rotate the substrate during the reagent application to achieve uniform coating via spin coating. The reagent delivery system (50), shown as a 'tonearm'-like dispenser in the figure, dispenses reagents onto the spinning substrate 10), ensuring the controlled application of the reagents necessary for molecular synthesis.

The lateral movement mechanism (60) is present in the first aspect but not shown in the arrangement of Figure 1, controlling the movement between the programmable light direction unit (30) and the substrate holder (40), allowing for precise alignment during the exposure phases. The controller (70) (not shown) governs the overall operation, managing the sequence of reagent delivery, exposure light patterning, and relative movement between components. The controller (70) orchestrates the entire process of copolymerization by adjusting the reagent delivery, exposure patterns, and movements as described in the first aspect.

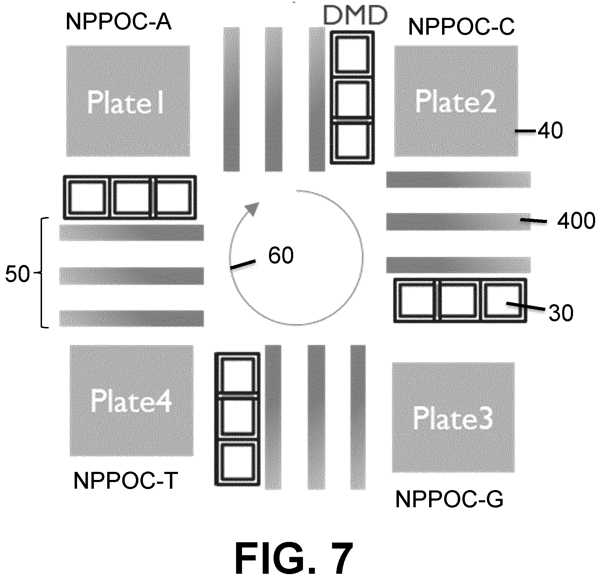

In embodiments, the present invention relates to a system (100) wherein the reagent delivery system (50) comprises one or more dispense units (400). The lateral movement mechanism (60) is further configured to move the substrate (10) relative to the dispense units (400) for efficient coating and exposure. The multiple dispense units (400) may be arranged in a linear (Figure 6) or circular (Figure 7) configuration, optimizing the dispensing of reagents onto the substrate (10). Figure 6 illustrates such an embodiment of the system (100), where the reagent delivery system (50) comprises one or more dispense units (400) and utilizes a lateral movement mechanism (60) to coat and expose the substrate (10). In this figure, the dispense units (400) are positioned above the substrate (10), and they are shown in a linear configuration, enabling efficient dispensing of reagents. The lateral movement mechanism (60) moves the substrate (10) beneath these dispense units (400), which can operate in a linear arrangement, dispensing reagents onto the substrate (10) through methods such as slit coating or via small dispensing holes. After the reagent coating, the substrate (10) moves to a position where it undergoes exposure to UV light. This exposure step is handled by the programmable light direction unit (30), as demonstrated in the figure. The exposure light, which can be shaped into specific patterns, is redirected onto the substrate (10), initiating the desired chemical or photochemical reactions. The controller (70), not depicted, coordinates these movements and operations in sequence. It controls the reagent delivery system (50) to dispense selected reagents, then directs the lateral movement mechanism (60) to shift the substrate, allowing for uniform reagent application. Once the reagents are applied, the substrate (10) is further moved relative to the programmable light direction unit (30), where it is exposed to UV light in a predetermined pattern to activate the process of copolymerization or another reaction as needed. Between two light exposures, the controller (70), not shown, control the lateral movement mechanism (60) to generate relative lateral movement between the programmable light direction unit (30) and the substrate holder (40), and change the configuration of the programmable light direction unit (30) so that it becomes adapted to redirect the exposure light in a second predetermined exposure pattern, different from the first one, onto the substrate (10).

This figure emphasizes the streamlined and linear nature of the system (10), where both reagent dispensing and exposure to light can be efficiently controlled by the system's mechanical and optical components. The use of multiple dispense units (400) enables greater flexibility in reagent application, which, combined with precise light exposure patterns, results in an optimized system for substrate processing, particularly in applications such as biomolecule synthesis.

Figure 7 illustrates a circular arrangement of multiple dispense units (400) and other components. In the present case, the synthesis of DNA oligomers is illustrated but other copolymers can be produced similarly. This configuration allows the substrate (10) to move in a circular path relative to the reagent delivery systems and the dispense units they comprise (400), with each unit performing a specific step in the synthesis process. The figure depicts several substrate holders (plates 1 to 4), here labeled NPPOC-A, NPPOC-C, NPPOC-T, and NPPOC-G, to indicate which monomer will be provided by the dispense units (400). In the present particular figure, monomers for DNA synthesis are provided but other monomers for other types of copolymers could be used instead. Each plate (40) is associated with distinct dispense units (400). These dispense units apply different reagents or execute different stages in the copolymerization process on the substrate. The lateral movement mechanism (60) in this embodiment is designed to rotate the substrate through these different stations, facilitating continuous processing as each station performs a defined function. The circular movement mechanism offers an advantage in efficiency, as the substrate (10) passes through each of the reagent stations in sequence, allowing for rapid and automated application of reagents. Additionally, the system incorporates one or more programmable light direction units (30), such as the DMD (Digital Micromirror Device) units depicted in the figure. These units are positioned between the circularly arranged reagent delivery systems (50) and are responsible for exposing the substrate (10) to UV light in predetermined exposure patterns. Between two light exposures, the controller (70), not shown, control the lateral movement mechanism (60) to generate relative lateral movement between the programmable light direction unit (30) and the substrate holder (40), and change the configuration of the programmable light direction unit (30) so that it becomes adapted to redirect the exposure light in a second predetermined exposure pattern, different from the first one, onto the substrate (10).

This setup allows for reagent dispensing and UV exposure, streamlining the process of synthesis and patterning on the substrate. The figure emphasizes the continuous nature of the process, where the substrate rotates through different steps in the synthesis, improving throughput and allowing for more complex multistep processes. The system's controller (70) would manage the sequence of reagent application and UV exposure, ensuring precise control over each stage of the synthesis. This circular configuration is particularly advantageous for large-scale or automated copolymerization processes, as it minimizes downtime between different steps and improves the overall efficiency of the system. For instance, the system may be designed to sequentially synthesize DNA strands on a substrate (10) by adding each nucleotide base in a controlled manner. In this circular configuration, multiple dispense units (400) are arranged around the substrate, each dedicated to dispensing reagents corresponding to one of the four nucleotide bases. The NPPOC prefix indicates the use of a photolabile protecting group (here (2-(2-nitrophenyl)propoxycarbonyl) NPPOC (but NPE (2-(2-nitrophenyl)ethyl) could be used instead) that protects the nucleotides during synthesis. These protecting groups prevent undesired reactions and can be removed using UV light exposure, ensuring that only specific regions of the DNA chain are extended at each step. The substrate (10) moves in a circular path relative to these dispense units (400) using the lateral movement mechanism (60), allowing it to pass through the stations dedicated to the sequential addition of A, C, T, and G nucleotides. At each station, a selected nucleotide base is dispensed onto the substrate. For example, at the NPPOC-A station, adenine is added to the growing DNA strand. Between the reagent delivery systems (50), one or more programmable light direction units (30) - represented here as DMD (Digital Micromirror Device) units - are positioned. These units direct UV light to deprotect specific areas on the substrate, removing the photolabile protecting groups (NPPOC groups) and allowing the next nucleotide to be added in the correct sequence. The light is applied in a predetermined pattern to ensure selective exposure, ensuring the accuracy and precision of the DNA synthesis process. This circular configuration enables continuous processing, where the substrate rotates through different synthesis stations for sequential nucleotide addition, followed by UV exposure for deprotection, until the complete DNA sequence is synthesized. The system's controller (70) orchestrates the entire process, controlling the reagent delivery, the movement of the substrate, and the UV exposure patterns.

In embodiments, the system (100) may further comprise at least one loading station configured to load and unload substrates (10), enabling automated substrate handling.

In embodiments, at least one process chamber (210) comprises an independent atmospheric control system configured to maintain a controlled environment, preventing side reactions and contamination.

In embodiments, at least one process chamber (210, see Figure 3) may comprise independent temperature and pressure control systems, enabling optimization of reaction conditions. In embodiments, at least one process chamber (210) or level (310) comprises a dedicated chemical waste collection system, preventing cross-contamination between synthesis steps.

In embodiments, the reagent delivery system (50) may comprise multiple dispense arms or tubes configured to dispense different chemicals onto the substrate (10). In embodiments, at least one process chamber (210) or level (310) comprises a pipetting arm configured to collect specific copolymerized molecules from the substrate surface.

In embodiments, the controller (70) may be further configured to execute a predetermined sequence of synthesis steps by controlling the reagent delivery system (50), the programmable light direction unit (30), and moving the substrate (10) between different process chambers (210) or levels (310) according to a predetermined schedule.

In embodiments, the reagent delivery system (50) may be configured to dispense reagents for polynucleotide synthesis. In embodiments, the present invention relates to a system (100) wherein the programmable light direction unit (30) comprises a digital micromirror device (DMD), enabling high-resolution light patterning with fast switching times.

In embodiments, the lateral movement mechanism (60) may comprise at least one of a movable stage supporting the substrate holder (40), a movable arm supporting the programmable light direction unit (30), or a combination of both. These configurations enable relative movement between the light pattern and substrate.

In embodiments, the system (100) may further comprise an in-situ mixing system configured to combine reagents immediately before dispensing onto the substrate (10), preventing reagent degradation and side reactions. In embodiments, the system (100) may further comprise an end-release mechanism configured to release synthesized oligonucleotides from the substrate (10).

In embodiments, the end-release mechanism may comprise the controller (70) being further configured to control the programmable light direction unit (30) and lateral movement mechanism (60) to cleave a photosensitive linker for removing specific copolymerized molecules from the substrate (10), enabling spatially-selective harvesting.

In embodiments, the light source (20) may be configured to emit exposure light with a peak emission in the range of from 200 to 700 nm, preferably from 330 nm to 400 nm. These wavelengths enable photochemical reactions without damaging biomolecules. In embodiments, the light source (20) may be configured to emit exposure light with a spectrum comprising an intensity at 365 nm that is at least 10% of the maximum intensity in the emitted spectrum. This wavelength is suitable for many photolabile protecting groups. The light source (20) may comprise at least one of a UV-LED (or an array thereof), a mercury arc lamp, or a laser (e.g., a scanning laser such as a 405 nm scanning laser, which are cost-effective high-intensity UV sources.

In embodiments, the programmable light direction unit (30) may comprise a confinement element comprising a lens such as a Fresnel lens or a zone plate, enabling focusing light to a spot. In embodiments, the programmable light direction unit may comprise a zone plate array to focus and shape the light beam, enabling dense synthesis sites on the substrate.

In embodiments, the system (100) may further comprise a cleaning mechanism configured to clean the substrate (10) between light exposure and reagent dispensing, wherein the controller (70) is further configured to control the cleaning mechanism, preventing carry-over contamination between synthesis steps.

In embodiments, the controller (70) may be configured to control the programmable light direction unit (30) and the lateral movement mechanism (60) such that the second predetermined exposure pattern does not overlap with the first predetermined exposure pattern, enabling enlarging the exposed substrate area.

In embodiments, the controller (70) may be configured to control the programmable light direction unit (30) and the lateral movement mechanism (60) such that the second predetermined exposure pattern is shifted relative to the first predetermined exposure pattern by less than the smallest distance between two exposure spots in the first predetermined exposure pattern, allowing for increased density of exposed features.

In embodiments, the system (100) may further comprise a temperature control mechanism configured to maintain the substrate (10) at a predetermined temperature during reagent dispensing and light exposure, wherein the controller (70) is further configured to control the temperature control mechanism. This is advantageous for optimizing reaction kinetics and specificity.

In embodiments, the reagent delivery system (50) may comprise multiple reagent reservoirs, each configured to contain a different monomer for copolymerized molecule synthesis, preventing cross-contamination.

In embodiments, the system (100) may further comprise an inert gas supply system configured to maintain an inert atmosphere in the vicinity of the substrate (10) during synthesis, wherein the controller (70) is further configured to control the inert gas supply system, preventing unwanted oxidation reactions.

Any feature of any embodiment of the first aspect may be as correspondingly described in any of the other aspects.

In the second aspect, the present invention relates to a method for synthesizing a predetermined library of copolymerized molecules on a substrate (10) based on a predetermined library design. The method comprises providing a system comprising a light source (20), a programmable light direction unit (30), a substrate holder (40), a reagent delivery system (50), and a lateral movement mechanism (60). The method iteratively synthesizes the copolymerized molecules at synthesis sites on the substrate (10) by repeating the steps of i) selecting a specific monomer, ii) dispensing the selected monomer, iii) activating some of the dispensed monomers through selective exposure to light, washing away unreacted monomers, and repeating these steps with subsequent monomers until the desired copolymerized molecules are completed. At least one of the steps iii) comprises:
iiia) controlling the programmable light direction unit (30) to redirect exposure light in a first predetermined exposure pattern onto the substrate (10); subsequently
iiib) controlling the lateral movement mechanism (60) to generate relative lateral movement between the programmable light direction unit (30) and the substrate holder (40), and change the configuration of the programmable light direction so that it becomes adapted to redirect the exposure light in a second predetermined exposure pattern, different from the first one, onto the substrate (10); and subsequently
iiic) controlling the programmable light direction unit (30) to redirect the exposure light in the second predetermined exposure pattern onto the substrate (10).

The method enables synthesizing complex molecule libraries with high density. The system provided in step a) may be a system according to any embodiment of the first aspect, and step b is performed by operating the controller (70), enabling an automated synthesis workflow.

In embodiments, step a) of the second aspect may consist in providing a system (100) comprising a multi-chamber system according to the first aspect, having a substrate (10) in a process chamber (230) other than the light exposure chamber (220). Step b) comprises dispensing a reagent on the substrate (10) using the reagent delivery system (50), moving the substrate (10) to the light exposure chamber (220), redirecting exposure light in a predetermined exposure pattern onto the substrate (10), and optionally moving the substrate (10) to a process chamber (230) for further processing or repeating steps for additional synthesis cycles.

In embodiments, step a) of the second aspect may consist in providing a system (100) comprising a process chamber (300) having multiple levels (310) according to the first aspect, having a substrate (10) in the substrate holder (40). Step b) comprises performing a step at the second level (310), moving the substrate holder (40) vertically to the first level (310), and performing a step at the first level (310), enabling a streamlined synthesis workflow in a compact multi-level system.

In embodiments, the method may comprise: a) providing a system wherein the reagent delivery system (50) comprises one or more dispense units (400); and wherein the lateral movement mechanism (60) is further configured to move the substrate (10) relative to the one or more dispense units (400), so as to enable the coating of the substrate (10) with reagents, and having a substrate (10) in the substrate holder (40); and b) dispensing the selected monomer onto the substrate (10) by activating one of the dispense units (400) and controlling the lateral movement mechanism (60) to move the substrate (10) relative to said one of the dispense units (400).

In embodiments, step a) of the second aspect consists in providing a system (100) wherein the reagent delivery system (50) comprises one or more dispense units (400); and wherein the lateral movement mechanism (60) is further configured to move the substrate (10) relative to the one or more dispense units (400), so as to enable the coating of the substrate (10) with reagents, and having a substrate (10) in the substrate holder (40). Step b) involves moving the substrate (10) in a circular path relative to circularly arranged dispense units (400), facilitating efficient and continuous processing. The system's design ensures precise control over the synthesis process, enabling the production of complex and high-density oligonucleotide libraries.

In embodiments, the copolymerized molecules may be nucleic acid polynucleotides. This allows synthesis of DNA or RNA libraries.

In embodiments, selectively exposing specific regions of the substrate (10) to light may activate nucleotide addition in growing nucleic acid polynucleotides, wherein the activation is either direct or indirect. This enables light-directed synthesis.

In embodiments, the activation of nucleotide addition may comprise at least one of: i) removal of protective groups for a subsequent nucleotide addition, or ii) activation or uncaging of an enzyme for subsequent addition of nucleotides. This provides flexibility in the synthesis method.

In embodiments, when the activation involves removal of protective groups, the nucleotide addition may be performed using phosphoramidite chemistry; and when the activation involves activation or uncaging of an enzyme, the nucleotide addition may involve enzymatic nucleotide coupling. This allows use of well-established chemistries.

In embodiments, the removal of protective groups may comprise: a) photolithographic removal of UV-labile protective groups; or b) photolithographic removal of acid-labile protective groups, using methods such as photogeneration of acids, photoresist or photoelectrochemistry.This provides options for the protective group chemistry.

In embodiments, the UV-labile protective groups may be selected from the group consisting of MeNPOC, NVOC, DMBOC, NPPOC, BzNPPOC, SPhNPPOC, and functionally equivalent UV-labile protective groups; or the acid-labile protective groups may be selected from the group consisting of DMT, MMT, and functionally equivalent acid-labile protective groups. These are commonly used protective groups.

In embodiments, the enzyme suitable for enzymatic nucleotide coupling may be selected from the group consisting of DNA polymerases, RNA polymerases, terminal transferases, and functionally equivalent enzymes capable of catalyzing nucleotide addition. These enzymes efficiently catalyze nucleotide addition.

In embodiments, the method may further comprise maintaining an inert atmosphere in the vicinity of the substrate (10) during synthesis using an inert gas supply system. This prevents oxidation and moisture.

In embodiments, the method may further comprise controlling the temperature of the substrate (10) during reagent dispensing and light exposure using a temperature control system. This provides optimal conditions for the reactions.

In embodiments, the second predetermined exposure pattern may not overlap with the first predetermined exposure pattern, thereby enlarging the area of the substrate (10) that has been exposed; or the first predetermined exposure pattern may be composed of exposure spots and the second predetermined exposure pattern may be shifted with respect to the first predetermined exposure pattern by less than the smallest distance between two exposure spots in the first predetermined exposure pattern, thereby increasing the density of exposed spots on the substrate (10). This allows increasing the synthesis area or density.

In embodiments, the method may further comprise a step of removing specific copolymerized molecules from the substrate (10) by performing light exposure steps to cleave a photosensitive linker attaching the copolymerized molecules to the substrate (10). This allows harvesting the synthesized molecules.

As an example embodiment involving a multilevel chamber system for synthesizing a predetermined library of copolymerized molecules on a substrate (10), the system may comprise a substrate holder (40) capable of vertical movement between multiple levels (310). The substrate holder (40) is also capable of rotating, which is advantageous for the spin-coating process. At each level (310), there are distinct reagent delivery systems (50) configured to dispense various reagents for the synthesis process. Level 1 may be equipped with an ACN drain, Level 2 with a THF drain, and Level 3 with a DMSO drain, each designed to collect specific chemicals that are spun off the substrate (10). The reagents are dispensed through multiple dispense units (400) located at each level (310), with each unit connected to different reagent sources. A series of reagent sources are present, each connected to a dispense unit (400). For the oxidation step, the sources include I₂/THF/Py (pyridine) as the oxidizing agent and THF as a solvent; for the capping step, they include AA (Acetic Anhydride) as the capping reagent and THF as a solvent. For the nucleotide addition steps, various NPPOC-protected nucleotides (NPPOC-C/ACN (acetonitrile), NPPOC-G/ACN, NPPOC-T/ACN, NPPOC-DMT-top/ACN, NPPOC-bottom/ACN) are used, along with DCI (4,5-dicyanoimidazole)/ACN and ACN rinse for cleaning. These reagents are delivered to the substrate (10) at the appropriate level (310) during the synthesis cycle. Additional reagent sources are present, including a base solution and its corresponding base rinse, as well as imidazole in DMSO (IMZ in DMSO) and DMSO as a solvent, which are used for different steps in the synthesis process such as capping, activation, and cleaning. An option for sucking back oligo is also present, i.e., a mechanism for recovering synthesized oligonucleotides. A Digital Micromirror Device (DMD) is present, as an example of the programmable light direction unit (30). This unit is responsible for redirecting exposure light in programmable patterns onto the substrate (10) during the synthesis process. The DMD is positioned to direct light onto the substrate (10) at each level (310), enabling precise control over the synthesis sites.

Any feature of any embodiment of the second aspect may be as correspondingly described in the first aspect.

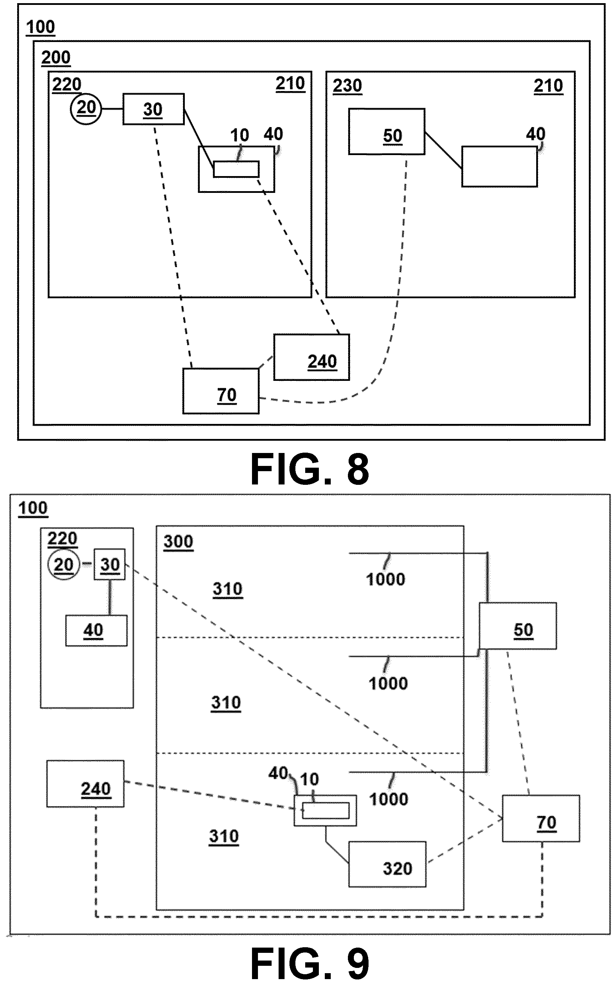

In the third aspect, illustrated in Figure 8, the present invention relates to system (100) for synthesizing a predetermined library of copolymerized molecules on a substrate (10), the system comprising:
a light source (20) configured to emit exposure light;
a programmable light direction unit (30) configured to redirect the exposure light in a programmable exposure pattern on the substrate (10);
a multi-chamber system (200) with at least two process chambers (210), wherein:
   a) each process chamber (210) comprises a substrate holder (40);
   b) at least one process chamber (220), designated as a light exposure chamber, comprises:
      i) a substrate holder (40) configured to hold the substrate (10), and
      ii) the programmable light direction unit (30);
a reagent delivery system (50) configured to dispense reagents for the synthesis of copolymerized molecules on the substrate (10) in at least one of the process chambers (230) other than the light exposure chamber (220);
a transfer mechanism (240) configured to move the substrate (10) between any of the process chambers (210); and
a controller (70) configured to:
   i) control the reagent delivery system (50) to dispense a selected reagent on the substrate (10) in a process chamber (230) other than the light exposure chamber (220); subsequently
   ii) control the transfer mechanism (240) to move the substrate (10) to the light exposure chamber (220); and subsequently
   iii) control the programmable light direction unit (30) to redirect the exposure light in a predetermined exposure pattern onto the substrate (10), wherein the controller is further configured to control the iterative execution of steps i) to iii) with varying selected reagents and exposure patterns, in such a way as to synthesize the predetermined library of copolymerized molecules on the substrate (10).

This allows the synthesis and light exposure to be optimized in separate chambers. In this aspect, the lateral movement mechanism (60) is optional.

As visible in Figure 8, this system (100) comprises a multi-chamber system (200) with at least two process chambers (210). Each process chamber (210) comprises a substrate holder (40), and at least a first process chamber (220), designated as a light exposure chamber, includes the programmable light direction unit (30). The reagent delivery system (50) is configured to dispense reagents in at least a second process chamber (230), different from the first process chamber (220). A transfer mechanism (240) is configured to move the substrate (10) between any of the process chambers (210). This multi-chamber configuration enables parallelization and optimization of the different synthesis steps.

The multi-chamber system (200) is depicted, illustrating the arrangement of process chambers (210) designated for specific synthesis steps. The transfer mechanism (240) facilitates the movement of the substrate (10) between these chambers, allowing for the sequential addition of polymerization reagents (such as nucleotide reagents) and exposure to light.

Any feature of the third aspect may be as correspondingly described for any embodiment of the first aspect. Also, any feature described as being further comprised in the first aspect may also be further comprised in the third aspect.

In the fourth aspect, the present invention relates to a method for synthesizing a predetermined library of copolymerized molecules on a substrate (10) based on a predetermined library design, the method comprising:
a) providing a system (100) according to the third aspect having a substrate (10) in one of the process chambers (230) other than the light exposure chamber (220); subsequently
b) iteratively synthesizing the copolymerized molecules on the substrate (10) by repeating the following steps until the predetermined library is complete:
   i) selecting a specific monomer from a predefined set of monomers, wherein the selection is based on the predetermined library design; subsequently
   ii) dispensing the selected monomer onto the substrate (10) using the reagent delivery system (50) in the process chamber (230) where the substrate (10) is located; subsequently
   iii) using the transfer mechanism (240) to move the substrate (10) with the dispensed reagent to the light exposure chamber (220); subsequently
   iv) activating some of the dispensed monomers wherein said activation comprises selectively exposing specific regions of the substrate (10) to light according to a predetermined pattern, wherein the exposed regions represent locations where the current monomer should be incorporated into a copolymerized molecule according to the predetermined library design; subsequently
   v) washing away unreacted monomers from the substrate (10); and subsequently
   vi) repeating steps i-v with subsequent monomers as specified by the predetermined library design until the desired copolymerized molecules are completed.

This enables high-throughput synthesis using a multi-chamber system.

In embodiments, the system provided in step a) may be a system according to the third aspect and wherein step b is performed by operating the controller. This simplifies the synthesis process.

Any feature of any embodiment of the fourth aspect may be as correspondingly described in the second aspect. Also, any feature described as being further comprised in the second aspect may also be further comprised in the third aspect.

In the fifth aspect, the present invention relates to a system for synthesizing a predetermined library of copolymerized molecules on a substrate (10), the system comprising:
a light source (20) configured to emit exposure light;
a programmable light direction unit (30) configured to redirect the exposure light in a programmable exposure pattern on the substrate (10);
a process chamber (300) having multiple levels (310) and a vertical movement mechanism (320) configured to move the substrate holder (40) vertically between the levels (310); wherein:
   - at least a light exposure level (310), comprises the programmable light direction unit (30); and
   - the reagent delivery system (50) is configured to dispense reagents at least at a dispensing level (310), different from the light exposure level (310)
a controller (70) configured to:
   i) control the reagent delivery system (50) to dispense a selected reagent on the substrate (10) at the dispensing level (310); subsequently
   ii) control the transfer mechanism (240) to move the substrate (10) to the light exposure level (310); and subsequently
   iii) control the programmable light direction unit (30) to redirect the exposure light in a predetermined exposure pattern onto the substrate (10) at the light exposure level (310), wherein the controller is further configured to control the iterative execution of steps i) to iii) with varying selected reagents and exposure patterns, in such a way as to synthesize the predetermined library of copolymerized molecules on the substrate (10).

This enables vertical integration of the synthesis and light exposure steps.

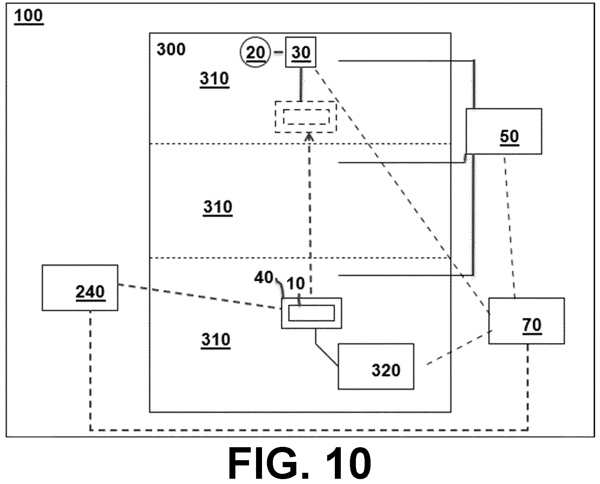

In embodiments, as illustrated in Figures 9 and 10, the present invention relates to a system (100) comprising a process chamber (300) having multiple levels (310) and a vertical movement mechanism (320) configured to move the substrate holder (40) vertically between the levels (310). The reagent delivery system (50) is configured to dispense reagents at least at one level (310), enabling a compact system design. In Figure 9, the multilevel system is depicted wherein the light direction unit (30) is in a separate chamber (220), showcasing the arrangement of multiple process chambers (220, 300) and the vertical movement mechanism (320) that allows for efficient processing of the substrate (10) through different stages of the synthesis process.

Referring to Figure 10, elements of the system (100) are illustrated in the case where the light direction unit is in the same chamber (300) as the reagent delivery system (50), showcasing the arrangement of its key components. The light source (20) emits exposure light, which is redirected by the programmable light direction unit (30) onto the substrate (10) held by the substrate holder (40). The substrate holder (40) is positioned within a process chamber (300), which is divided into multiple levels (310). The vertical movement mechanism (320) allows for vertical movement of the substrate holder (40) between these levels (310). The reagent delivery system (50) dispenses reagents onto the substrate (10). The controller (70) manages the operations of the system, coordinating the dispensing of reagents, exposure to light patterns, and vertical movement of the substrate.

Any feature of any embodiment of the fifth aspect may be as correspondingly described in the second aspect. Also, any feature described as being further comprised in the first aspect may also be further comprised in the fifth aspect.

In the sixth aspect, the present invention relates to a method for synthesizing a predetermined library of copolymerized molecules on a substrate (10) based on a predetermined library design, the method comprising:
a) providing a system (100) according to the fifth aspect having a substrate (10) in the substrate holder (40), the substrate holder (40) being at a dispensing level (310); subsequently
b) iteratively synthesizing the copolymerized molecules on the substrate (10) by repeating the following steps until the predetermined library is complete:
   i) selecting a specific monomer from a predefined set of monomers, wherein the selection is based on the predetermined library design; subsequently
   ii) dispensing the selected monomer onto the substrate (10) using the reagent delivery system (50) at the dispensing level (310) where the substrate holder (40) is located; subsequently
   iii) using the transfer mechanism (240) to move the substrate (10) with the dispensed monomer to the light exposure level (310); subsequently
   iv) activating some of the dispensed monomers wherein said activation comprises selectively exposing specific regions of the substrate (10) to light according to a predetermined pattern, wherein the exposed regions represent locations where the current monomer should be incorporated into a copolymerized molecule according to the predetermined library design; subsequently
   v) washing away unreacted monomers from the substrate (10); and subsequently
   vi) repeating steps i-v with subsequent monomers as specified by the predetermined library design until the desired copolymerized molecules are completed.

In embodiments,
a. step a) may consist in providing a system according to the fifth aspect having a substrate in a process chamber other than the light exposure chamber; and
b. step b) may comprise:
   - dispensing a reagent on the substrate using the reagent delivery system; subsequently
   - using the transfer mechanism to move the substrate with the dispensed reagent to the light exposure chamber; subsequently
   - redirecting exposure light from the light source in a predetermined exposure pattern onto the substrate using the programmable light direction unit in the light exposure chamber; and subsequently
   - optionally, using the transfer mechanism to move the substrate to a process chamber other than the light exposure chamber for either further processing or repeating steps b) to d) one or more times for additional synthesis cycles.

This allows the synthesis and light exposure steps to be performed in separate optimized chambers.

In embodiments,
a. step a) may consist in providing a system according to the fifth aspect having a substrate in the substrate holder; and
b. step b) may comprise:
   - performing a step ii) at the second level, subsequently
   - operating the vertical movement mechanism to move the substrate holder vertically to the first level, and subsequently
   - performing a step iii) at the first level.

This enables vertical integration of the synthesis steps.

In embodiments,
a. step a) may consist in providing a system according to the fifth aspect having a substrate in the substrate holder; and
b. step b) may comprise a step ii) of dispensing the selected monomer onto the substrate by activating one of the dispense units and controlling a lateral movement mechanism to move the substrate relative to said one of the dispense units.

This allows the reagent to be efficiently coated on the substrate.

Any feature of any embodiment of the sixth aspect may be as correspondingly described in the second aspect. Also, any feature described as being further comprised in the second aspect may also be further comprised in the sixth aspect.

In the seventh aspect, the present invention relates to a system (100) for synthesizing a predetermined library of copolymerized molecules on a substrate (10), the system comprising:
a light source (20) configured to emit exposure light;
a programmable light direction unit (30) configured to redirect the exposure light in a programmable exposure pattern on the substrate (10);
a substrate holder (40) configured to hold the substrate (10);
a reagent delivery system (50) comprising one or more dispense units (400) configured to dispense reagents for the synthesis of copolymerized molecules on the substrate (10);
a lateral movement mechanism (60) configured to move the substrate (10) relative to the one or more dispense units (400), thereby enabling the coating of the substrate (10) with reagents; and
a controller (70) configured to:
   i) control the reagent delivery system (50) to dispense a selected reagent onto the substrate (10) using one of the dispense units (400); subsequently
   ii) control the lateral movement mechanism (60) to move the substrate (10) relative to said one of the dispense units (400), thereby dispensing the selected reagent onto the substrate (10); subsequently
   iii) control the lateral movement mechanism (60) to move the substrate (10) to a position where it can be exposed to light of the programmable light direction unit (30), and subsequently
   iv) control the programmable light direction unit (30) to redirect the exposure light in a predetermined exposure pattern onto the substrate (10), wherein the controller is further configured to control the iterative execution of steps i) to iv) with varying selected reagents and exposure patterns, in such a way as to synthesize the predetermined library of copolymerized molecules on the substrate (10).

This enables efficient coating of the substrate with reagent.

Any feature of any embodiment of the seventh aspect may be as correspondingly described in any of the other aspects.

In this aspect, the present invention relates to a system (100) wherein the reagent delivery system (50) comprises one or more dispense units (400). The lateral movement mechanism (60) is configured to move the substrate (10) relative to the dispense units (400) for efficient coating. The multiple dispense units (400) may be arranged in a linear or circular configuration, optimizing the dispensing of reagents onto the substrate (10).

Figure 6 illustrates such an embodiment of the system (100), where the reagent delivery system (50) comprises one or more dispense units (400) and utilizes a lateral movement mechanism (60) to coat the substrate (10). In this figure, the dispense units (400) are positioned above the substrate (10), and they are shown in a linear configuration, enabling efficient dispensing of reagents. The lateral movement mechanism (60) moves the substrate (10) beneath these dispense units (400), which can operate in a linear arrangement, dispensing reagents onto the substrate (10) through methods such as slit coating or via small dispensing holes. After the reagent coating, the substrate (10) moves to a position where it undergoes exposure to UV light. This exposure step is handled by the programmable light direction unit (30), as demonstrated in the figure. The exposure light, which can be shaped into specific patterns, is redirected onto the substrate (10), initiating the desired chemical or photochemical reactions. The controller (70), not depicted, coordinates these movements and operations in sequence. It controls the reagent delivery system (50) to dispense selected reagents, then directs the lateral movement mechanism (60) to shift the substrate with respect to the dispense units, allowing for uniform reagent application. Once the reagents are applied, the substrate (10) is further moved relative to the programmable light direction unit (30), where it is exposed to UV light in a predetermined pattern to activate the process of copolymerization or another reaction as needed. This figure emphasizes the streamlined and linear nature of the system (10), where both reagent dispensing and exposure to light can be efficiently controlled by the system's mechanical and optical components. The use of multiple dispense units (400) enables greater flexibility in reagent application, which, combined with precise light exposure patterns, results in an optimized system for substrate processing, particularly in applications such as biomolecule synthesis.

Figure 7 illustrates a circular arrangement of multiple dispense units (400) and other components. In the present case, the synthesis of DNA oligomers is illustrated but other copolymers can be produced similarly. This configuration allows the substrate (10) to move in a circular path relative to the reagent delivery systems and the dispense units they comprise (400), with each unit performing a specific step in the synthesis process. The figure depicts several substrate holders (plates 1 to 4), here labeled NPPOC-A, NPPOC-C, NPPOC-T, and NPPOC-G, to indicate which monomer will be provided by the dispense units (400). In the present particular figure, monomers for DNA synthesis are provided but other monomers for other types of copolymers could be used instead. Each plate (40) is associated with distinct dispense units (400). These dispense units apply different reagents or execute different stages in the copolymerization process on the substrate. The lateral movement mechanism (60) in this embodiment is designed to rotate the substrate through these different stations, facilitating continuous processing as each station performs a defined function. The circular movement mechanism offers an advantage in efficiency, as the substrate (10) passes through each of the reagent stations in sequence, allowing for rapid and automated application of reagents. Additionally, the system incorporates one or more programmable light direction units (30), such as the DMD (Digital Micromirror Device) units depicted in the figure. These units are positioned between the circularly arranged reagent delivery systems (50) and are responsible for exposing the substrate (10) to UV light in predetermined exposure patterns.

This setup allows for reagent dispensing and UV exposure, streamlining the process of synthesis and patterning on the substrate. The figure emphasizes the continuous nature of the process, where the substrate rotates through different steps in the synthesis, improving throughput and allowing for more complex multistep processes. The system's controller (70) would manage the sequence of reagent application and UV exposure, ensuring precise control over each stage of the synthesis. This circular configuration is particularly advantageous for large-scale or automated copolymerization processes, as it minimizes downtime between different steps and improves the overall efficiency of the system. For instance, the system may be designed to sequentially synthesize DNA strands on a substrate (10) by adding each nucleotide base in a controlled manner. In this circular configuration, multiple dispense units (400) are arranged around the substrate, each dedicated to dispensing reagents corresponding to one of the four nucleotide bases. The NPPOC prefix indicates the use of a photolabile protecting group (such as NPE- or NPPOC-) that protects the nucleotides during synthesis. These protecting groups prevent undesired reactions and can be removed using UV light exposure, ensuring that only specific regions of the DNA chain are extended at each step. The substrate (10) moves in a circular path relative to these dispense units (400) using the lateral movement mechanism (60), allowing it to pass through the stations dedicated to the sequential addition of A, C, T, and G nucleotides. At each station, a selected nucleotide base is dispensed onto the substrate. For example, at the NPPOC-A station, adenine is added to the growing DNA strand. Between the reagent delivery systems (50), one or more programmable light direction units (30) - represented here as DMD (Digital Micromirror Device) units - are positioned. These units direct UV light to deprotect specific areas on the substrate, removing the photolabile protecting groups (NPPOC groups) and allowing the next nucleotide to be added in the correct sequence. The light is applied in a predetermined pattern to ensure selective exposure, ensuring the accuracy and precision of the DNA synthesis process. This circular configuration enables continuous processing, where the substrate rotates through different synthesis stations for sequential nucleotide addition, followed by UV exposure for deprotection, until the complete DNA sequence is synthesized. The system's controller (70) orchestrates the entire process, controlling the reagent delivery, the movement of the substrate, and the UV exposure patterns.

In the eighth aspect, the present invention relates to a method for synthesizing a predetermined library of copolymerized molecules on a substrate based on a predetermined library design, the method comprising:
a. providing a system according to the seventh aspect having a substrate in the substrate holder, subsequently,
b. iteratively synthesizing the copolymerized molecules at synthesis sites on the substrate by repeating the following steps until the predetermined library is complete:
   i) selecting a specific monomer from a predefined set of monomers, wherein the selection is based on the predetermined library design; subsequently
   ii) controlling the reagent delivery system to dispense the selected monomer onto the substrate using one of the dispense units; subsequently
   iii) controlling the lateral movement mechanism to move the substrate relative to said one of the dispense units, thereby dispensing the selected monomer onto the substrate; subsequently
   iv) controlling the lateral movement mechanism to move the substrate to a position where it can be exposed to light of the programmable light direction unit; subsequently
   v) activating some of the dispensed monomers by controlling the programmable light direction unit to redirect the exposure light in a predetermined exposure pattern onto the substrate, wherein the exposed regions represent locations where the current monomer should be incorporated into a copolymerized molecule according to the predetermined library design; subsequently
   vi) washing away unreacted monomers from the substrate; and
   vii) repeating steps i-vi with subsequent monomers as specified by the predetermined library design until the desired copolymerized molecules are completed.

This enables high-throughput synthesis with efficient reagent coating.

In embodiments, the system provided in step a) may be a system according to the seventh aspect and wherein step b is performed by operating the controller. This simplifies the synthesis process.

### Example 1: Programmable Wafer-Scale Maskless Photolithographic Synthesis of Nucleic Acid Oligonucleotide Libraries

A wafer-scale maskless photolithographic system was used to synthesize a predetermined library of nucleic acid oligonucleotides on a silicon oxide substrate. The system comprised a UV-LED light source emitting at 365 nm, a digital micromirror device (DMD) for redirecting the exposure light in various programmable exposure patterns onto the substrate, and a fluidic system for dispensing and exchanging reagents.

The substrate was first functionalized with hydroxyl groups suitable for phosphoramidite-based nucleotide addition. At each synthesis cycle, a pre-determined nucleotide phosphoramidite reagent was dispensed onto the substrate using the fluidic system. The DMD was then used to expose the substrate with a pre-determined light pattern, selectively deprotecting the hydroxyl groups at specific sites according to the desired oligonucleotide sequences. This allowed the nucleotide to couple only at the exposed sites. After washing away excess reagents, the exposure and coupling steps were repeated with different nucleotides and patterns to extend the oligonucleotide chains.

By repeating the selective exposure and coupling cycles with the four DNA nucleotide phosphoramidites, all the desired sequences in the oligonucleotide library were synthesized in a parallel fashion on the substrate. The use of the DMD allowed fully programmable light patterning without needing any physical masks. Shifting the DMD between exposures enabled the synthesis of high-density oligonucleotide arrays.

After the synthesis was complete, the oligonucleotides were cleaved from the substrate using a final light-directed deprotection. The resulting oligonucleotide library contained over 1 million different sequences, each around 100 nucleotides long.

### Example 2: Spin-Coating Reagent Delivery for Cost-Effective Photolithographic Oligonucleotide Synthesis

A key challenge in scaling up photolithographic oligonucleotide synthesis is the high reagent consumption and cost. To address this, a spin-coating method was developed for efficiently delivering small volumes of phosphoramidite reagents uniformly across a 200 mm silicon wafer functionalized for DNA synthesis.

At each synthesis cycle, 100 µL of the required phosphoramidite solution was dispensed at the center of the wafer. The wafer was then rapidly accelerated to 5000 rpm, causing the solution to spread across the entire surface. The spinning continued for 10 seconds to evaporate the solvent, leaving a thin, uniform layer of the phosphoramidite.

Light exposure was then performed using a DMD to selectively activate the desired sites for coupling. After a 30 second coupling reaction, the wafer was again spun at high speed while spraying with acetonitrile to efficiently wash away the excess reagents. The total reagent usage per cycle was less than 200 µL.

This process was repeated for 100 cycles to synthesize oligonucleotides with an average length of 100 nucleotides. The resulting density was approximately 1 million different sequences per cm². Compared to standard reagent delivery by flooding the surface, the spin-coating method reduced phosphoramidite consumption by over 100-fold.

The quality of the oligonucleotides was assessed by cleaving a sample from the wafer and analyzing via mass spectrometry. The mass spectrum showed a tight distribution around the expected molecular weight, indicating high coupling efficiency. Sequencing a subset of the cleaved oligos further confirmed an error rate of less than 1 in 300 nucleotides.

These results show that spin-coating is a highly effective way to minimize reagent consumption in high-throughput photolithographic oligonucleotide synthesis. The ability to achieve good coupling quality with very low reagent volumes substantially reduces the cost of making complex oligonucleotide libraries on a wafer scale. Combined with the programmable, high-resolution light patterning enabled by the DMD, this approach allows unprecedented scale and cost efficiency for on-demand DNA synthesis.

### Example 3: High-Speed Photolithographic Synthesis Using Synchronized Wafer Movement and DMD Exposure Patterns

To maximize the throughput of maskless photolithographic oligonucleotide synthesis, a system was developed to continuously move the wafer substrate relative to the DMD exposure head. This allowed the light patterning to be parallelized across a much larger area compared to a step-and-repeat exposure strategy.

The system utilized a linear air bearing stage to move a 300 mm wafer functionalized for DNA synthesis underneath a DMD-based exposure head at a constant speed of 10 mm/s. The DMD contained 4 million individually addressable mirrors with a pitch of 5.4 µm. An array of UV-LEDs was used to illuminate the DMD with 365 nm light at an intensity of 100 mW/cm².

To synthesize a complex oligonucleotide library, the wafer was first flooded with the desired phosphoramidite solution using an inkjet dispenser. The DMD was then used to project a series of exposure patterns as the wafer moved past. The patterns were designed such that each oligonucleotide received a total exposure dose of 5 J/cm², sufficient for >99% deprotection efficiency.

By continuously varying the DMD pattern in synchrony with the wafer movement, the entire 300 mm wafer was patterned in less than 30 seconds. After coupling and washing, the process was repeated for each subsequent nucleotide addition. The total time per synthesis cycle was under 2 minutes.

Using this approach, a library of 10 million different oligonucleotide sequences was synthesized on the 300 mm wafer. Each oligonucleotide was 150 nucleotides long, for a total of 1.5 billion bases synthesized in under 5 hours. The oligonucleotides were then cleaved from the wafer and analyzed by sequencing.

The sequencing results showed that all 10 million designed sequences were present in the library, with an average error rate of 1 in 500 bases. The error rate was slightly higher than for a step-and-repeat system due to the challenges of precisely synchronizing the DMD patterns with the wafer movement. However, the throughput was increased by over an order of magnitude.

This example demonstrates the feasibility of scaling photolithographic oligonucleotide synthesis to unprecedented throughputs by combining high-speed wafer movement with synchronized, programmable DMD exposure. With further optimization, this approach could enable the on-demand synthesis of oligonucleotide libraries containing billions of sequences for synthetic biology and data storage applications.

### Example 4: Multi-Chamber System for High-Throughput Oligonucleotide Synthesis

This example of method for synthesizing a library of copolymerized molecules on a substrate involves a multi-chamber system that optimizes throughput and control. The process begins with preparing the substrate, typically a 300 mm silicon wafer, by functionalizing it with a molecule providing hydroxyl groups, such as e.g., a silane derivative. Alternatively, the substrate can also be functionalized with NPPOC-protected phosphoramidites which get readily deprotected for the subsequent reaction steps. This functionalization is followed by the coating with a linker molecule, typically a phosphoramidite-based cleavable linker in a mixture of 4,5-dicyanoimidazole (DCI) and acetonitrile (ACN). The substrate is spun to ensure uniform coating, and oxygen and moisture are removed to prevent interference. Once coated, the system proceeds to cap unreacted hydroxyl groups using a mix of acetic anhydride (AA) and 1-methylimidazole and pyridine in tetrahydrofuran (THF), followed by a thorough rinse with IACN and solvent drainage. Subsequently, the wafer is coated with a mixture of iodine in THF, water and pyridine to oxidize the phosphite backbone, followed by a thorough rinse and/or drainage with ACN. The oxidation can be conducted during every nucleotide addition step or once at the end of the oligonucleotide synthesis. Optionally, the wafer surface is dried.

Next, the substrate is transferred to a UV exposure chamber, where a high-power UV-LED array and a programmable light direction unit, such as a digital micromirror device (DMD), direct UV light onto the substrate. The exposure process is controlled by the central controller, which manages the programmable light direction unit to redirect exposure light in a first predetermined exposure pattern onto the substrate, selectively deprotecting specific regions. Subsequently, the controller activates the lateral movement mechanism to generate relative lateral movement between the programmable light direction unit and the substrate holder. It also changes the configuration of the programmable light direction unit to adapt it for redirecting the exposure light in a second predetermined exposure pattern, different from the first one, onto the substrate. This second exposure pattern is shifted with respect to the first by less than the smallest distance between two exposure spots in the initial pattern, thereby increasing the density of exposed spots on the substrate. This approach allows for higher-density patterning, essential for synthesizing complex libraries.

In applications illustrating the fourth aspect, the controller may skip the lateral movement and second exposure pattern. Instead, it controls the programmable light direction unit to redirect exposure light in a single predetermined exposure pattern onto the substrate, selectively deprotecting specific regions without additional shifts or adjustments. The exposure can either be conducted in dry conditions or subsequent to a wafer coating with imidazole in dimethylsulfoxide(DMSO) or others.

After UV exposure, the substrate is washed to remove cleaved NPPOC residues and additional residual reagents, preparing it for further chemical processes. The next nucleotides are then coupled onto the deprotected regions using 4,5-dicyanoimidazole as an activator and ACN as a solvent, with the light-exposed areas determining where the nucleotides bind.

The system enhances throughput by utilizing multiple chambers, each equipped for a specific task. The reagent dispensing chamber features a delivery system with multiple dispense arms for phosphoramidite monomers and synthesis reagents. The washing chamber, equipped with spray nozzles, efficiently removes unreacted monomers, while the drying chamber uses nitrogen gas flow and controlled heating to dry the substrate rapidly.

A robotic transfer mechanism and a lateral movement mechanism move the wafer between chambers and generate relative lateral movement between the programmable light direction unit and the substrate holder, all coordinated by the central controller. This controller orchestrates all synthesis processes, including reagent dispensing, UV exposure patterns, lateral and vertical movements, washing protocols, and transfer timings. The iterative process involves dispensing selected reagents onto the substrate, exposing it to patterned light to activate specific regions, washing away unreacted monomers, and drying the substrate before repeating the cycle with subsequent monomers.

The multi-chamber approach allows for parallel processing, where different wafers can be in various chambers simultaneously, dramatically increasing efficiency. For instance, while one wafer undergoes UV exposure, another can be in the reagent dispensing stage, and a third in the washing process. This parallelization enables the synthesis of complex libraries of over 10 million different oligonucleotide sequences on a single 300 mm wafer in a fraction of the time conventional methods require.

The system ensures tight control over the reaction environment. The UV exposure chamber operates under an inert argon atmosphere to prevent side reactions, while the washing chamber uses a closed-loop system to recycle solvents, reducing waste and environmental impact. After completing the synthesis cycles, the wafer undergoes a final deprotection step, yielding a high-density oligonucleotide library with excellent uniformity and purity. This method is highly suitable for applications in genomics and synthetic biology.

### Example 5: Multi-Level System for High-Throughput Oligonucleotide Synthesis

In the present example, the system for synthesizing a predetermined library of copolymerized molecules on a substrate involves a multi-level chamber, a light source, a programmable light direction unit, and a lateral movement mechanism. The process starts with the substrate placed in a substrate holder inside a process chamber that has multiple levels. Each level serves specific functions in the synthesis process. The system features both vertical and lateral movement mechanisms to allow the substrate holder to move between levels and to generate relative lateral movement between the programmable light direction unit and the substrate holder, enabling sequential steps of the synthesis to occur at different levels and positions.

Initially, the substrate, which is coated with hydroxyl groups or with NPPOC-protected phosphoramidites, is positioned at the first level, where the reagent delivery system dispenses selected monomers according to the predetermined library design. The dispensing involves applying NPPOC-protected monomers and other synthesis reagents such as 4,5-dicyanoimidazole (DCI) in acetonitrile (ACN). The reagent application takes place in a controlled environment, free of oxygen and moisture to prevent unwanted reactions.

Following the application of the reagents, the vertical movement mechanism raises the substrate to the next level, where capping agents are applied to cap unreacted hydroxyl groups. Capping involves the use of acetic anhydride (AA) in tetrahydrofuran (THF) to block unwanted reactions. Once capped, the substrate is rinsed, and the solution is drained.

Next, the substrate is raised to another level, where a light source emits UV light to selectively deprotect regions of the substrate (this may involve an oxidation step, especially if the UV light is used to generate an acid). At this stage, as described in the second aspect, the programmable light direction unit, controlled by the system's central controller, performs a sequence of operations to expose different areas of the substrate without overlap:
iiia) The controller controls the programmable light direction unit to redirect the exposure light in a first predetermined exposure pattern onto the substrate, selectively deprotecting specific regions.
iiib) Subsequently, the controller activates the lateral movement mechanism to generate relative lateral movement between the programmable light direction unit and the substrate holder. Simultaneously, it changes the configuration of the programmable light direction unit so that it becomes adapted to redirect the exposure light in a second predetermined exposure pattern, different from the first one.
iiic) After the lateral movement and reconfiguration, the controller controls the programmable light direction unit to redirect the exposure light in the second predetermined exposure pattern onto the substrate. This second pattern does not overlap with the first, thereby enlarging the area of the substrate that has been exposed.

By executing these steps, the system efficiently covers larger substrate areas with precise control over the exposure patterns, enhancing the synthesis capabilities. This UV exposure occurs in an inert environment to avoid side reactions.

Alternatively, as described in the sixth aspect, steps iiib) and iiic) are skipped.

After UV exposure, the unreacted monomers and excess reagents are washed away using spray nozzles located at another level, ensuring a clean substrate for further reactions.

A drying step is conducted by applying nitrogen gas flow and controlled heating to remove any residual solvent.

The process continues iteratively, with the substrate moving between the different levels in the process chamber, undergoing reagent application, UV exposure with sequential exposure patterns and optional lateral movements, washing, and drying steps-all coordinated by the system's central controller. The controller manages the reagent delivery, light exposure patterns, vertical and optional lateral movements of the substrate and programmable light direction unit, and the timing of all operations. Each cycle incorporates new monomers into the copolymerized molecules according to the library design, while the programmable light direction unit applies alternating light patterns between cycles to vary the regions of activation.

By performing specific tasks at different levels of the process chamber and optionally utilizing lateral movements combined with programmable exposure patterns, the system ensures precise control over each step, reducing contamination risk and improving synthesis throughput. The vertical and optional lateral movement mechanisms, coupled with the ability to pattern light in multiple configurations, enable the creation of complex libraries of copolymerized molecules in an efficient, streamlined manner.

The separation of steps into distinct levels further enhances the system's flexibility and control, allowing different environmental conditions-such as inert atmospheres or recycling solvent systems-to be applied at different stages. The multi-level design ensures the system can handle complex and high-density synthesis tasks, such as generating libraries of over a million copolymerized molecules on a single substrate, with excellent uniformity and precision.

After the final synthesis cycle, the substrate undergoes a final deprotection step, leaving the completed library of copolymerized molecules ready for further applications in fields such as synthetic biology and genomics.

### Example 6: Linear Cleaning and Synthesis System for High-Precision Copolymerization on a Substrate

The process begins with a substrate, such as a square plate or a round wafer, placed in a substrate holder. The first step involves coating the substrate with hydroxyl groups or NPPOC-protected phosphoramidites by using one or more dispense units from the reagent delivery system. The lateral movement mechanism ensures that the substrate moves relative to the dispense units, allowing an even coating of the reagents on the surface. In this setup, the dispense units are activated sequentially, dispensing the reagents in a controlled manner.

Following the coating, the process moves on to capping any unreacted hydroxyl (-OH) groups using a capping reagent, such as acetic anhydride, dispensed by another unit. The substrate is moved relative to the dispense unit to ensure that the capping reagent is evenly distributed across the surface.

Next, the substrate undergoes oxidation, where the lateral movement mechanism brings the substrate into alignment with another dispense unit containing oxidizing agents. These reagents oxidize the reactive sites on the substrate, preparing them for subsequent reactions.

The UV exposure step follows, where the substrate is moved beneath a programmable light direction unit, such as a digital micromirror device (DMD) array. When illustrating the second aspect, the controller first directs the programmable light direction unit to redirect exposure light in a first predetermined exposure pattern onto the substrate, selectively removing the NPPOC protecting groups in specific locations. Subsequently, it controls the lateral movement mechanism to generate relative lateral movement between the programmable light direction unit and the substrate holder and changes the configuration of the programmable light direction unit to adapt it for redirecting the exposure light in a second predetermined exposure pattern, different from the first one, onto the substrate. The second exposure pattern is shifted with respect to the first by less than the smallest distance between two exposure spots in the initial pattern, thereby increasing the density of exposed spots on the substrate. Finally, the controller directs the programmable light direction unit to redirect the exposure light in this second predetermined exposure pattern onto the substrate. This method enhances the density of reactive sites, allowing for the synthesis of more complex copolymerized molecules.

When illustrating the eighth aspect, the controller directs the programmable light direction unit to redirect exposure light in a predetermined exposure pattern onto the substrate, selectively removing the NPPOC protecting groups in specific locations without additional lateral movement or changes in exposure patterns.

Between each step, a linear cleaning head is used to remove any residual chemicals or reagents from the substrate surface. The cleaning head operates in conjunction with nitrogen (N₂) flow and an exhaust/drain system to ensure effective cleaning and solvent removal. This cleaning system prevents cross-contamination between steps by thoroughly rinsing the substrate. The spacing between the cleaning heads ensures that the substrate is isolated from light and other external factors during cleaning, maintaining precise control over the environment.

The process is continuous, with the substrate moving laterally through the various stages of reagent dispensing, UV exposure, and cleaning. This setup ensures a controlled and repeatable method for synthesizing copolymerized molecules. Each dispense unit and cleaning head is activated at the appropriate moment, while the lateral movement mechanism ensures the correct positioning of the substrate relative to each unit.

By employing this method, the system achieves high precision in copolymerization on the substrate. The combination of controlled reagent dispensing, programmable UV exposure with increased density of exposed spots when required, and effective cleaning between steps results in a reliable and efficient synthesis process suitable for producing complex molecular libraries.

### Example 7: Circular Continuous Synthesis System for High-Throughput Copolymerization

In this example, the substrate follows a continuous circular path as it moves through various steps in a polypeptide synthesis process, utilizing multiple dispense units arranged in a circular configuration. The lateral movement mechanism is configured to move the substrate along this circular path relative to the dispense units, allowing for an efficient and seamless synthesis process. Each dispense unit is dedicated to a different reagent or a distinct step in the overall procedure.

The circularly arranged dispense units comprise separate units designed to handle specific tasks or apply distinct reagents. For example, units may dispense Fmoc-protected amino acids (such as Fmoc-Ala, Fmoc-Val, Fmoc-Leu) or perform activation and deprotection steps. As the substrate moves from one dispense unit to the next, each reagent is applied in a precise and controlled manner to specific regions of the substrate surface.

Between the dispense units, programmable light direction units (such as digital micromirror devices, DMDs) are strategically positioned. These units are responsible for exposing the substrate to light at predetermined points along the circular path, removing photolabile protecting groups and activating the desired regions of the substrate for subsequent reactions. The lateral movement mechanism ensures that the substrate is properly aligned with each dispense unit and light direction unit, ensuring consistent and accurate application and exposure.

When illustrating the second aspect, the controller orchestrates a sequence of steps to enhance the exposed area of the substrate:
iiia) The controller controls the programmable light direction unit (30) to redirect exposure light in a first predetermined exposure pattern onto the substrate (10), selectively deprotecting specific regions. This initial exposure activates certain areas for amino acid coupling.
iiib) Subsequently, the controller controls the lateral movement mechanism (60) to generate relative lateral movement between the programmable light direction unit (30) and the substrate holder (40). It also changes the configuration of the programmable light direction unit so that it becomes adapted to redirect the exposure light in a second predetermined exposure pattern, different from the first one, onto the substrate (10).
iiic) The controller then controls the programmable light direction unit (30) to redirect the exposure light in the second predetermined exposure pattern onto the substrate (10). The second exposure pattern does not overlap with the first predetermined exposure pattern, thereby enlarging the area of the substrate (10) that has been exposed. This allows for additional regions to be activated for polypeptide synthesis, increasing the diversity and complexity of the synthesized molecules.

When illustrating the eighth aspect, steps iiib and iiic are skipped. The controller controls the programmable light direction unit to redirect exposure light in a single predetermined exposure pattern onto the substrate, selectively deprotecting specific regions without additional lateral movement or changes in the exposure pattern.

This continuous cycling process allows for efficient, high-throughput synthesis of copolymerized polypeptides. The circular configuration ensures that the substrate moves through each step of the synthesis process without the need for back-and-forth movement, reducing processing time and improving overall efficiency. Each rotation of the substrate around the circular path represents a complete cycle, during which new reagents are applied, light exposure is performed, and the synthesis progresses according to the predetermined design.

The system's design allows for parallel, sequential processing, where multiple plates or substrates can move through the synthesis steps simultaneously. Each substrate follows the same continuous circular path, encountering the same series of dispense units and light exposure units. This setup enables the system to handle a large number of substrates, further increasing throughput and reducing downtime.

The circular arrangement of dispense units and programmable light direction units, along with the continuous movement of the substrate, ensures a smooth, efficient, and precise synthesis process. The system is highly adaptable, capable of handling various synthesis protocols, and can be configured to apply different reagents or perform different synthesis steps at each dispense unit.

The system utilizes photolabile protecting groups specific to amino acids, such as o-nitroveratryloxycarbonyl (NVOC) or nitrobenzyl-based groups, which can be removed upon exposure to light. This allows for spatial control over amino acid coupling, enabling the synthesis of complex polypeptide sequences on the substrate surface.

The continuous movement and precise control afforded by the programmable light direction units and lateral movement mechanism make this system ideal for producing high-density arrays of polypeptides. These arrays can be used in various applications, including drug discovery, protein interaction studies, and biomaterial development.

Overall, the circular continuous synthesis system provides a robust platform for high-throughput polypeptide synthesis, combining efficiency with precision to meet the demands of advanced biochemical research and industrial applications.

### Example 8: Multi-Level System for High-Throughput Synthesis of Polyethylene Glycol Copolymers

In this example, the system for synthesizing a predetermined library of copolymerized molecules on a substrate involves a multi-level chamber, a light source, a programmable light direction unit, and a lateral movement mechanism. The process starts with the substrate-such as a silicon wafer or glass slide-placed in a substrate holder inside a process chamber that has multiple levels. Each level serves specific functions in the synthesis process. The system features both vertical and lateral movement mechanisms to allow the substrate holder to move between levels and to generate relative lateral movement between the programmable light direction unit and the substrate holder, enabling sequential steps of the synthesis to occur at different levels and positions.

Initially, the substrate is coated with photolabile protecting groups using the reagent delivery system. This involves applying monomers of polyethylene glycol (PEG) derivatives that are protected with nitrobenzyl-based photolabile groups. The dispensing is carried out using a mixture of the protected monomers and an appropriate catalyst in a solvent like dimethylformamide (DMF). The reagent application takes place in a controlled environment, free of oxygen and moisture, to prevent unwanted reactions.

Following the application of the reagents, the vertical movement mechanism raises the substrate to the next level, where capping agents are applied to block any unreacted hydroxyl groups. Capping involves the use of acetic anhydride (AA) in tetrahydrofuran (THF) to prevent side reactions. Once capped, the substrate is rinsed with a suitable solvent, and the solution is drained.

Next, the substrate is raised to another level, where a light source emits UV light to selectively deprotect regions of the substrate. At this stage, as described in the second aspect, the programmable light direction unit, controlled by the system's central controller, performs a sequence of operations to increase the density of exposed spots on the substrate:
iiia) The controller controls the programmable light direction unit to redirect the exposure light in a first predetermined exposure pattern onto the substrate. This pattern is composed of discrete exposure spots arranged in a grid. The UV light removes the photolabile protecting groups in these specific locations, activating them for polymerization.
iiib) Subsequently, the controller activates the lateral movement mechanism to generate relative lateral movement between the programmable light direction unit and the substrate holder. It also changes the configuration of the programmable light direction unit so that it becomes adapted to redirect the exposure light in a second predetermined exposure pattern, different from the first one. This second pattern is shifted with respect to the first by less than the smallest distance between two exposure spots in the initial pattern.
iiic) After the lateral movement and reconfiguration, the controller controls the programmable light direction unit to redirect the exposure light in the second predetermined exposure pattern onto the substrate. Because the shift is less than the smallest distance between two exposure spots in the first pattern, the second exposure spots occupy positions between those of the first pattern, effectively increasing the density of exposed spots on the substrate.

By executing these steps, the system significantly enhances the density of activated sites on the substrate, allowing for the synthesis of more complex and diverse copolymer structures. This precise control over exposure patterns is crucial for applications requiring high-resolution patterning.

Alternatively, as described in the sixth aspect, steps iiib and iiic are skipped. In this case, the controller only directs the programmable light direction unit to redirect exposure light in a single predetermined exposure pattern onto the substrate, without additional lateral movement or shifting of the exposure pattern. This approach is suitable when the initial density of exposure spots meets the requirements of the synthesis.

After UV exposure, the unreacted monomers and excess reagents are washed away using spray nozzles located at another level, ensuring a clean substrate for further reactions. A washing solution like ethanol or THF is used to remove any residual substances.

A drying step is conducted by applying nitrogen gas flow and controlled heating to remove any residual solvent. This prepares the substrate for the next cycle of monomer addition.

The process continues iteratively, with the substrate moving between the different levels in the process chamber, undergoing reagent application, UV exposure with sequential exposure patterns and lateral movements (when required), washing, and drying steps-all coordinated by the system's central controller. The controller manages the reagent delivery, light exposure patterns, vertical and lateral movements of the substrate and programmable light direction unit, and the timing of all operations. Each cycle incorporates new PEG monomers into the copolymer chain according to the library design, while the programmable light direction unit applies alternating light patterns between cycles to vary the regions of activation.

By performing specific tasks at different levels of the process chamber and utilizing lateral movements combined with programmable exposure patterns, the system ensures precise control over each step. This reduces contamination risk and improves synthesis throughput. The vertical and lateral movement mechanisms, coupled with the ability to pattern light in multiple configurations, enable the creation of complex libraries of PEG-based copolymers in an efficient, streamlined manner.

The separation of steps into distinct levels further enhances the system's flexibility and control, allowing different environmental conditions-such as inert atmospheres or solvent recycling systems-to be applied at different stages. The multi-level design ensures the system can handle complex and high-density synthesis tasks, such as generating libraries of over a million different copolymer sequences on a single substrate, with excellent uniformity and precision.

After the final synthesis cycle, the substrate undergoes a final deprotection step to remove any remaining protecting groups, leaving the completed library of PEG copolymers ready for further applications. These applications may include drug delivery systems, surface functionalization, or the development of biomaterials with tailored properties.

It is to be understood that although preferred embodiments, specific constructions and configurations, as well as materials, have been discussed herein for devices according to the present invention, various changes or modifications in form and detail may be made without departing from the scope of this invention. For example, any formulas given above are merely representative of procedures that may be used. Functionality may be added or deleted from the block diagrams and operations may be interchanged among functional blocks. Steps may be added or deleted to methods described within the scope of the present invention.

## Claims

1. A system (100) for synthesizing a predetermined library of copolymerized molecules on a substrate (10), the system comprising:
a light source (20) configured to emit exposure light;
a programmable light direction unit (30) configured to redirect the exposure light in a programmable exposure pattern on the substrate (10);
a substrate holder (40);
a reagent delivery system (50) configured to dispense reagents for the synthesis of copolymerized molecules on the substrate (10);
a lateral movement mechanism (60) configured to generate relative lateral movement between the programmable light direction unit (30) and the substrate holder (40); and
a controller (70) configured to:
i) control the reagent delivery system (50) to dispense a selected reagent on the substrate (10); subsequently
ii) control the programmable light direction unit (30) to redirect the exposure light in a first predetermined exposure pattern onto the substrate (10); subsequently
iii) control the lateral movement mechanism (60) to generate relative lateral movement between the programmable light direction unit (30) and the substrate holder (40), and change the configuration of the programmable light direction unit (30) so that it becomes adapted to redirect the exposure light in a second predetermined exposure pattern, different from the first one, onto the substrate (10); and subsequently
iv) control the programmable light direction unit (30) to redirect the exposure light in the second predetermined exposure pattern onto the substrate (10),
wherein the controller is further configured to control the iterative execution of steps i) to iv) with varying selected reagents and exposure patterns, in such a way as to synthesize the predetermined library of copolymerized molecules on the substrate (10).

2. The system (100) according to claim 1, further comprising:
a multi-chamber system (200) with at least two process chambers (210), wherein:
a) each process chamber (210) comprises a substrate holder (40);
b) at least a first process chamber (220), designated as a light exposure chamber, comprises:
i) the substrate holder (40) of claim 1,
ii) the programmable light direction unit (30), and
iii) the lateral movement mechanism (60) configured to generate relative lateral movement between the programmable light direction unit (30) and the substrate holder (40) of claim 1;
c) the reagent delivery system (50) is configured to dispense reagents in at least a second process chamber (230), different from the first process chamber (220); and
d) a transfer mechanism (240), separate from or comprised in the lateral movement mechanism (60), configured to move the substrate (10) between any of the process chambers (210).

3. The system (100) of claim 1 or claim 2, further comprising:
a) a process chamber (300) having multiple levels (310); and
b) a vertical movement mechanism (320) configured to move the substrate holder (40) vertically between the levels (310);
wherein the reagent delivery system (50) is configured to dispense reagents at least at one level (310).

4. The system (100) according to any one of claims 1 to 3, wherein at least one process chamber (210) or level (310) comprises a spinning mechanism (600) configured to rotate the substrate holder (40) and wherein the controller is further configured to control the spinning mechanism and the reagent delivery system to dispense reagent on a substrate on the substrate holder.

5. The system (100) according to claim 1, wherein the reagent delivery system (50) comprises one or more dispense units (400); and wherein the lateral movement mechanism (60) is further configured to move the substrate (10) relative to the one or more dispense units (400), so as to enable the coating of the substrate (10) with reagents, and relative to the programmable light direction unit (30), thereby enabling exposure of the substrate.

6. The system (100) according to any one of claims 1 to 5, wherein the controller (70) is further configured to execute a predetermined sequence of synthesis steps by controlling the reagent delivery system (50), the programmable light direction unit (30), and
- if multiple process chambers (210) are present, moving the substrate (10) between different process chambers (210) according to a predetermined schedule;
- if multiple levels (310) are present within a process chamber, controlling the vertical movement of the substrate (10) between different levels (310) according to a predetermined schedule.

7. The system (100) according to any one of claims 1 to 6 for synthesizing a predetermined library of polynucleotides, wherein the reagent delivery system (50) is configured to dispense reagents for polynucleotide synthesis.

8. The system (100) according to any one of claims 1 to 7, wherein the programmable light direction unit (30) comprises a digital micromirror device (DMD) (30).

9. The system (100) according to any one of claims 1 to 8, further comprising an end-release mechanism (1900) configured to release synthesized oligonucleotides from the substrate (10).

10. The system (100) according to any one of claims 1 to 9, wherein the end-release mechanism comprises the controller (70) being further configured to control the programmable light direction unit (30), and lateral movement mechanism (60) to cleave a photosensitive linker for removing specific copolymerized molecules from the substrate (10).

11. The system (100) according to any one of claims 1 to 10, wherein the controller (70) is configured to control the programmable light direction unit (30) and the lateral movement mechanism (60) such that the second predetermined exposure pattern does not overlap with the first predetermined exposure pattern.

12. The system (100) according to any one of claims 1 to 11, wherein the controller (70) is configured to control the programmable light direction unit (30) and the lateral movement mechanism (60) such that the second predetermined exposure pattern is shifted relative to the first predetermined exposure pattern by less than the smallest distance between two exposure spots in the first predetermined exposure pattern.

13. A method for synthesizing a predetermined library of copolymerized molecules on a substrate (10) based on a predetermined library design, the method comprising:
a) providing a system comprising:
- a light source (20) configured to emit exposure light;
- a programmable light direction unit (30) configured to redirect the exposure light in a programmable exposure pattern on the substrate (10);
- a substrate holder (40) having a substrate (10) therein;
- a reagent delivery system (50) configured to dispense reagents for the synthesis of copolymerized molecules on the substrate (10);
- a lateral movement mechanism (60) configured to generate relative lateral movement between the programmable light direction unit (30) and the substrate holder (40); and
b) iteratively synthesizing the copolymerized molecules at synthesis sites on the substrate (10) by repeating the following steps until the predetermined library is complete:
i) selecting a specific monomer from a predefined set of monomers, wherein the selection is based on the predetermined library design; subsequently
ii) dispensing the selected monomer onto the substrate (10); subsequently
iii) activating some of the dispensed monomers wherein said activation comprises selectively exposing specific regions of the substrate (10) to light according to a predetermined pattern, wherein the exposed regions represent locations where the current monomer should be incorporated into a copolymerized molecule according to the predetermined library design, subsequently
iv) washing away unreacted monomers from the substrate (10); and subsequently
v) repeating steps i-iv with subsequent monomers as specified by the predetermined library design until the desired copolymerized molecules are completed,
wherein at least one of the steps iii) comprises:
iiia) controlling the programmable light direction unit (30) to redirect exposure light in a first predetermined exposure pattern onto the substrate (10); subsequently
iiib) controlling the lateral movement mechanism (60) to generate relative lateral movement between the programmable light direction unit (30) and the substrate holder (40), and change the configuration of the programmable light direction so that it becomes adapted to redirect the exposure light in a second predetermined exposure pattern, different from the first one, onto the substrate (10); and subsequently
iiic) controlling the programmable light direction unit (30) to redirect the exposure light in the second predetermined exposure pattern onto the substrate (10).

14. The method according to claim 13, wherein the copolymerized molecules are nucleic acid polynucleotides.

15. The method according to claim 13 or claim 14, wherein:
a) the second predetermined exposure pattern does not overlap with the first predetermined exposure pattern, thereby enlarging the area of the substrate (10) that has been exposed; or
b) the first predetermined exposure pattern is composed of exposure spots and wherein the second predetermined exposure pattern is shifted with respect to the first predetermined exposure pattern by less than the smallest distance between two exposure spots in the first predetermined exposure pattern, thereby increasing the density of exposed spots on the substrate (10).
